# EUROPÄISCHE PATENTSCHRIFT

(11) **EP 3 272 136 B1**
(45) Veröffentlichungstag und Bekanntmachung des Hinweises auf die Patenterteilung: **06.01.2021**
(21) Anmeldenummer: 16706335.3
(22) Anmeldetag: 19.02.2016
(51) Int. Cl.: H04W 4/00, H04B 5/00, H04B 5/02, H04W 4/70

(54) **VERFAHREN UND SYSTEM ZUR KOMMUNIKATION UND ZUR DRAHTLOSEN ENERGIEÜBERTRAGUNG**
METHODS AND SYSTEM FOR COMMUNICATION AND FOR WIRE-FREE ENERGY TRANSMISSION
PROCÉDÉ ET SYSTÈME DE COMMUNICATION ET DE TRANSMISSION D'ÉNERGIE SANS FIL

(30) Priorität: 16.03.2015 DE 102015204704
(43) Veröffentlichungstag der Anmeldung: 24.01.2018
(73) Patentinhaber: Deutsche Telekom AG, 53113 Bonn (DE)
(72) Erfinder: KURZ, Michael, 1230 Wien (AT)
(74) Vertreter: Schwöbel, Thilo K.
(86) Internationale Anmeldenummer: PCT/EP2016/053583
(87) Internationale Veröffentlichungsnummer: WO 2016/146340

(56) Entgegenhaltungen:
- WO-A1-2013/165165
- US-A1- 2011 221 389
- US-A1- 2012 005 497
- US-A1- 2012 270 498
- US-A1- 2014 156 772

## Beschreibung

### Stand der Technik

Die Erfindung betrifft ein Verfahren zur Kommunikation zwischen wenigstens einem ersten Telekommunikationsendgerät und einem zweiten Telekommunikationsendgerät, wobei das erste Telekommunikationsendgerät und das zweite Telekommunikationsendgerät jeweils eine Weitverkehrskommunikationsschnittstelle und eine Nahbereichskommunikationsschnittstelle aufweist und wobei das erste und zweite Telekommunikationsendgerät jeweils einen Energiespeicher zur Speicherung elektrischer Energie sowie jeweils eine Energieübertragungsschnittstelle aufweisen.

Die Erfindung betrifft ferner auch ein System umfassend ein erstes und zweites Telekommunikationsendgerät zur Kommunikation zwischen wenigstens einem ersten Telekommunikationsendgerät und einem zweiten Telekommunikationsendgerät, wobei das erste Telekommunikationsendgerät und das zweite Telekommunikationsendgerät jeweils eine Weitverkehrskommunikationsschnittstelle und eine Nahbereichskommunikationsschnittstelle aufweist und wobei das erste und zweite Telekommunikationsendgerät jeweils einen Energiespeicher zur Speicherung elektrischer Energie sowie jeweils eine Energieübertragungsschnittstelle aufweisen.

Ferner betrifft die Erfindung auch ein Computerprogramm mit Programmcodemitteln und ein Computerprogrammprodukt.

Die Bedeutung von Datenkommunikation zwischen Maschinen ist bereits in der Vergangenheit stark gewachsen und wird dies voraussichtlich auch in derzumindest näheren - Zukunft tun. Insbesondere handelt es sich in diesem Zusammenhang um die Verwendung von Telekommunikations¬end¬geräten, welche dafür vorgesehen sind, ohne Benutzerinteraktion vor Ort (d.h. beispielsweise über eine Benutzeroberfläche des Geräts oder auch über Bedienelemente, wie beispielsweise Tasten oder dergleichen) Daten an ein Telekommunikationsnetz zu senden bzw. vom Telekommunikationsnetz zu empfangen. Solche Telekommunikations¬end¬geräte bzw. Anwendungen werden auch als Machine-to-Machine (M2M bzw. MTM) Kommunikation bezeichnet. Hierbei steht der automatisierte Informationsaustausch zwischen Endgeräten wie Maschinen, Automaten, Fahrzeugen oder Containern untereinander oder mit einer zentralen Leitstelle - insbesondere als Teil des Telekommunikationsnetzes - im Vordergrund.

Insbesondere in der Logistikbranche finden M2M-Lösungen zunehmend eine größere Akzeptanz und Anwendung. Hierbei werden Telekommunikations¬end¬geräte, welche für die Machine-to-Machine Kommunikation geeignet bzw. ausgebildet sind, insbesondere als Teil von Paketen bzw. Versandeinheiten teilweise über längere Transportwege transportiert bzw. bewegt, wobei für die Sendungsverfolgung bzw. Sendungsnachverfolgung (tracking und tracing) ein Datenaustausch zwischen den Telekommunikations¬end¬geräten und einem Telekommunikationsnetz - typischerweise ein Mobilfunknetz - erforderlich ist. Machine-to-Machine Telekommunikationsendgeräte werden beispielsweise im Bereich von aktivem Tracking bzw. Tracing (Sendungsnachverfolgung) verwendet. Teilweise ergeben sich hierbei aufgrund von im Endeffekt zu geringer Batteriekapazität der transportierten Telekommunikationsendgeräte, beispielsweise aufgrund eines vergleichsweise zeitlich langen Transportweges bzw. auch aufgrund von vergleichsweise harschen klimatischen Bedingungen am Versandort und/oder währen des Transports und/oder am Empfangsort, erhebliche Ausfälle - teilweise in Höhe von zweistelligen Prozentsätzen - von solchen Telekommunikations¬end¬geräten, welche nicht in der Lage sind, die Distanz und/oder die Zeitspanne des Transports zu überbrücken

US 2014/156772 A1 offenbart eine Lösung zur drahtlosen Energieübertragung von einem Telekommunikationsgerät zu einem anderen Telekommunikationsgerät.

### Offenbarung der Erfindung

Der Erfindung liegt die Aufgabe zugrunde, ein Verfahren zur Kommunikation zwischen wenigstens einem ersten Telekommunikationsendgerät und einem zweiten Telekommunikationsendgerät anzugeben, wobei das erste Telekommunikationsendgerät und das zweite Telekommunikationsendgerät jeweils neben einer Weitverkehrskommunikationsschnittstelle, einer Nahbereichskommunikationsschnittstelle und einem Energiespeicher zur Speicherung elektrischer Energie auch eine Energieübertragungsschnittstelle aufweist, wobei die Energie¬übertragungs¬schnittstelle sowohl zur Übertragung elektrischer Energie zum Energiespeicher hin als auch zur Übertragung elektrischer Energie vom Energiespeicher weg konfiguriert sind, so dass es möglich ist, die Ausfallrate solcher Telekommunikations¬end¬geräte zu reduzieren, insbesondere bei einer Logistikanwendung der Telekommunikations¬end¬geräte, bei der solche Telekommunikations¬end¬geräte teilweise über längere Transportwege transportiert werden.

Diese Aufgabe wird erfindungsgemäß gelöst durch ein Verfahren zur Kommunikation zwischen wenigstens einem ersten Telekommunikationsendgerät und einem zweiten Telekommunikationsendgerät, wobei das erste Telekommunikationsendgerät und das zweite Telekommunikationsendgerät jeweils eine Weitverkehrskommunikationsschnittstelle und eine Nahbereichskommunikationsschnittstelle aufweist, wobei die Weitverkehrskommunikationsschnittstellen des ersten und zweiten Telekommunikationsendgeräts für einen Datenaustausch mit einem Telekommunikationsnetz konfiguriert sind, wobei die Nahbereichskommunikationsschnittstellen des ersten und zweiten Telekommunikationsendgeräts für einen Datenaustausch zwischen dem ersten und dem zweiten Telekommunikationsendgerät konfiguriert sind, wobei das erste Telekommunikationsendgerät und das zweite Telekommunikationsendgerät jeweils einen Energiespeicher zur Speicherung elektrischer Energie sowie jeweils eine Energieübertragungsschnittstelle aufweist, wobei die Energie¬übertragungs¬schnittstelle des ersten und zweiten Telekommunikationsendgeräts sowohl zur Übertragung elektrischer Energie zum Energiespeicher des ersten und/oder zweiten Telekommunikationsendgeräts hin als auch zur Übertragung elektrischer Energie vom Energiespeicher des ersten und/oder zweiten Telekommunikationsend¬geräts weg konfiguriert sind, wobei das Verfahren für den Fall eines gegenüber einem vorgegebenen Referenzladezustand geringeren Ladezustands des Energiespeichers des ersten Telekommunikations¬end¬geräts die folgenden Schritte aufweist:
-- in einem ersten Verfahrensschritt wird über die Nahbereichskommunikationsschnittstelle des ersten Telekommunikationsend¬geräts und über die Nahbereichskommunikationsschnittstelle des zweiten Telekommunikationsend¬geräts eine eine Energieübertragungsinformation umfassende Nachricht zum zweiten Telekommunikations¬end¬gerät übertragen, wobei die Energieübertragungsinformation eine Anfrage zur Übertragung zusätzlicher Energie in den Energiespeicher des ersten Telekommunikations¬end¬geräts umfasst,
-- es wird ein dem ersten Verfahrensschritt nachfolgender zweiter Verfahrensschritt oder ein dem ersten Verfahrensschritt nachfolgender dritter Verfahrensschritt durchgeführt, wobei im zweiten Verfahrensschritt über die Energie-übertragungsschnittstelle des ersten Telekommunikationsendgeräts und über die Energieübertragungsschnittstelle des zweiten Telekommunikations¬end¬geräts der Ladezustand des Energiespeichers des ersten Telekommunikations¬end¬geräts erhöht wird, wobei im dritten Verfahrensschritt über die Weitverkehrskommunikationsschnittstelle des zweiten Telekommunikations¬end¬geräts wenigstens eine Nachricht - für das erste Telekommunikations¬end¬gerät - zwischen dem Telekommunikationsnetz und dem zweiten Telekommunikationsend¬gerät übertragen wird.

Es ist hierdurch gemäß der vorliegenden Erfindung in vorteilhafter Weise möglich, dass Ausfälle solcher Geräte bzw. Telekommunikations¬end¬geräte, die insbesondere während eines Transportes erfolgen bzw. während eines Transportes zu erheblichen Funktionsbeeinträchtigungen führen können, bis hin zu einem vollständigen Abbruch sämtlicher Kommunikationsfunktionalitäten eines Telekommunikationsendgeräts mit dem Telekommunikationsnetz, in vergleichsweise einfacher Weise verringert werden können. Im Gegensatz zu passiven Verfahren zur Sendungsnachverfolgung - wie beispielsweise die Verwendung von Strichcodes (Barcodes) oder von passive RFID (Radio Frequency IDentification) Geräten oder Transpondern - erlaubt die erfindungsgemäße aktive Methode des Trackings bzw. der Sendungsnachverfolgung eine genaue Verfolgung von Versandeinheiten, beispielsweise von Paketen, zumindest sofern ein Telekommunikationsnetz, insbesondere in Form eines Mobilfunkkommunikationsnetzes, erreichbar ist.

Die gemäß der vorliegenden Erfindung beschriebene Lösung löst ein Problem im Bereich der Machine-to-Machine Kommunikation, bei der typischerweise eine Mehrzahl bzw. eine Vielzahl von (oftmals gleichartiger) Telekommunikations¬end¬geräte bzw. Machine-to-Machine Geräte (nachfolgend auch als MTC-Geräte (Machine Type Communication Device) bezeichnet) dazu benutzt werden, den Transportweg von Versandeinheiten, wie beispielsweise Pakete oder sonstige zu versendende Elemente, nachzuvollziehen bzw. zu kontrollieren (insbesondere in Form einer Sendungsnachverfolgung). Solche (Machine-to-Machine) Telekommunikationsendgeräte benutzen typischerweise zur Datenkommunikation bekannte Datenkommunikationsnetze, insbesondere in Form der Mobilfunknetze beispielsweise der zweiten, dritten, vierten und/oder fünften Generation (2G/GSM (Global System for Mobile Communication), 3G/UMTS (Universal Mobile Telecommunication System), 4G/LTE (Long Term Evolution)). Insbesondere im Fall von längeren Transportwegen und/oder Transportwegen in klimatisch anspruchsvollen Bereichen (insbesondere mit besonders hohen und/oder besonders niedrigen Temperaturen und/oder besonders hoher Luftfeuchtigkeit, etc.) ist es bei herkömmlichen Systemen mit einer höheren Wahrscheinlichkeit möglich, dass die in Form von beispielsweise einer Batterieladung oder einer Akkuladung im Telekommunikations¬end¬gerät vorhandene benutzbare Energie für den längeren Transportweg nicht ausreichend ist. Im Extremfall ist dann die Funkverbindung zu dem betreffenden Telekommunikations¬end¬gerät unterbrochen bzw. zumindest gestört.

Erfindungsgemäß ist es daher vorteilhaft vorgesehen, eine Möglichkeit zum Aufladen der Energiespeicher, insbesondere Akkumulatoren bzw. Akkus, von solchen Telekommunikations¬end¬geräten zu schaffen, die drahtlos erfolgt - insbesondere auf der Basis eines induktiven Prinzips zur Realisierung des Energieladevorgangs oder auf der Basis von Verfahren zum Aufladen von Akkus durch Ausnutzen von Resonanzphänomenen (inductive charging, resonant charging). Alternativ oder kumulativ zu einem induktiven oder resonanten Ladevorgang ist es erfindungsgemäß vorgesehen, dass optional der Ladevorgang auf der Basis von Solarenergie, insbesondere Photovoltaik, erfolgt und/oder auf der Basis eines Ladevorgangs auf der Basis von Bewegungsinduziertem Laden (movement induced charging) und/oder durch einen Ladevorgang auf der Basis des piezoelektrischen Effekts (piezo electric charging) und/oder durch einen Ladevorgang auf der Basis des Seebeckeffekts (Seebeck electric methods of charging). Erfindungsgemäß ist es ferner vorgesehen, dass der Ladevorgang in einer bidirektionalen Weise und/oder in einer multidirektionalen Weise erfolgt, was im Gegensatz zur derzeit üblichen Realisierung von Energieladevorgängen steht, bei denen solche Energieladevorgänge lediglich in eine Richtung erfolgen, beispielsweise in der Richtung zu einem Mobiltelefon hin.

Insbesondere im Rahmen von Logistikanwendungen ist es häufig der Fall, dass Telekommunikations¬end¬geräte in einer Weise angeordnet sind, dass ein Großteil der Telekommunikations¬end¬geräte umgeben sind von anderen Telekommunikations-end¬geräten, insbesondere solchen Telekommunikations¬end¬gerät des gleichen oder eines ähnlichen Typs. Beispielsweise ist dies der Fall, wenn die Telekommunikationsendgeräte Teil von Versandeinheiten, beispielsweise Pakete, sind, die beispielsweise innerhalb eines Logistikvolumens, beispielsweise eines Lastkraftwagens oder eines Containers oder auch innerhalb eines Lagerhauses, möglichst platzsparend angeordnet sind. Typischerweise ist in einer solchen Situation (insbesondere im Fall von im Wesentlichen quaderförmigen Außenabmessungen der Versandeinheiten) eine rechtwinklige Anordnung im Sinne einer platzsparenden Lagerung vorteilhaft, wobei die Versandeinheiten in der Regel relativ nah beieinander angeordnet sind, d.h. einen geringen räumlichen Abstand voneinander haben bzw. (zumindest in der Regel oder für eine Mehrheit der Versandeinheiten einer vorgegebenen Mehrzahl von Versandeinheiten) direkt benachbarte Versandeinheiten gegenseitig aneinander anliegen bzw. berühren. In einer solchen Situation ist es erfindungsgemäß vorteilhaft möglich, dass - für den Fall, dass der Energiespeicher in einem einer Versandeinheit zugeordneten Telekommunikations¬end¬gerät einen zu geringen Ladezustand aufweist (unterhalb eines vorgegebenen Referenzladezustands (entweder eines für alle Telekommunikations¬end¬geräte der Mehrzahl von Versandeinheiten gleichen Referenzladezustands oder auch eines für unterschiedliche Telekommunikations¬end¬geräte unterschiedlichen (beispielsweise in Abhängigkeit der des vorgsehenen Transportweges oder der Dauer des Transports) vorgegebenen Referenzladezustands)) - der Energiespeicher dieses Telekommunikations¬end¬geräts über einen Ladevorgang durch Energieübertragung von anderen Telekommunikationsendgeräten - insbesondere den unmittelbar benachbarten Telekommunikationsendgeräten - geladen wird. Erfindungsgemäß wird hierbei ein spezieller Algorithmus verwendet, der einen Datenaustausch zwischen den entsprechenden Telekommunikationsendgeräten der verschiedenen Versandeinheiten vorsieht. Dieser Datenaustausch - erfindungsgemäß insbesondere in verschlüsselter Form - erfolgt erfindungsgemäß insbesondere mittels einer kurzreichweitigen Kommunikationsverbindung zwischen den Telekommunikations¬end¬geräten, insbesondere über ein Verfahren gemäß NFC (Near Field Communication), RFID (Radio Frequency IDentification), Bluetooth, insbesondere Bluetooth Low Energy, WLAN (Wireless Local Area Network), WiMAX oder andere funkbasierte Technologien, insbesondere Mobilfunktechnologien der zweiten, dritten, vierten oder einer nachfolgenden Generation.

Erfindungsgemäß ist es vorgesehen, dass eine Mehrzahl von Telekommunikationsendgeräten (insbesondere als Machine-to-Machine Geräten und als Teil von Versandeinheiten) betrachtet werden. Diese Mehrzahl von Telekommunikationsendgeräten weisen erfindungsgemäß jeweils eine Weitverkehrskommunikationsschnittstelle, eine Nahbereichs¬kommunikations¬schnittstelle, einen Energiespeicher zur Speicherung elektrischer Energie sowie eine Energie¬übertragungs¬schnittstelle auf. Hierbei sind die die Weitverkehrskommunikationsschnittstellen der Telekommunikationsendgeräte für einen Datenaustausch mit einem Telekommunikationsnetz konfiguriert; die Nahbereichskommunikationsschnittstellen der Telekommunikationsendgeräte sind für einen Datenaustausch zwischen den Telekommunikationsendgeräten (d.h. untereinander) konfiguriert und die Energie¬übertragungs¬schnittstellen der Telekommunikationsendgeräte sind sowohl zur Übertragung elektrischer Energie zum Energiespeicher eines der Telekommunikationsendgeräte hin als auch zur Übertragung elektrischer Energie vom Energiespeicher eines der Telekommunikations¬end¬geräte weg konfiguriert. In der Regel handelt es sich erfindungsgemäß um eine Kommunikation zwischen jeweils zwei Telekommunikations¬end¬geräten aus der Mehrzahl von betrachteten Telekommunikations¬end¬geräten (die insbesondere in einer bestimmten räumlichen Anordnung angeordnet sind), wobei eines der beiden Telekommunikationsendgeräte (nachfolgend auch als das erste Telekommunikations¬end¬gerät bezeichnet) tendenziell einen zu geringen Ladezustand seines Energiespeichers aufweist bzw. detektiert, während das andere der beiden Telekommunikations¬end¬geräte zumindest potentiell einen ausreichenden Ladezustand seines Energiespeichers aufweist. Gemäß dem erfindungsgemäßen Verfahren ist es nun vorgesehen, dass für den Fall eines gegenüber einem vorgegebenen Referenzladezustand geringeren Ladezustands des Energiespeichers des ersten Telekommunikations¬end¬geräts die folgenden Schritte durchgeführt werden:
In einem ersten Verfahrensschritt wird über die Nahbereichskommunikationsschnittstelle des ersten Telekommunikationsend¬geräts und über die Nahbereichskommunikationsschnittstelle des zweiten Telekommunikationsend¬geräts eine eine Energieübertragungsinformation umfassende Nachricht zum zweiten Telekommunikations¬end¬gerät übertragen, wobei die Energieübertragungsinformation eine Anfrage zur Übertragung zusätzlicher Energie in den Energiespeicher des ersten Telekommunikations¬end¬geräts umfasst. Hierbei handelt es sich insbesondere um eine verschlüsselte Datenübertragung zwischen dem ersten Telekommunikationsendgerät und dem zweiten Telekommunikations¬end¬gerät. Erfindungsgemäß umfasst diese die Energieübertragungsinformation umfassende Nachricht insbesondere eine Anfrage (an das zweite Telekommunikations¬end¬gerät) zur Übertragung zusätzlicher Energie und/oder auch eine Anfrage zur Übernahme von ernergieverbrauchenden Funktionalitäten (beispielsweise die Aktivierung bzw. Benutzung der Weitverkehrskommunikationsschnittstelle) durch das zweite Telekommunikations¬end¬gerät für das erste Telekommunikations¬end¬gerät. Die im ersten Verfahrensschritt vom ersten Telekommunikations¬end¬gerät ausgesandte Nachricht (mit wenigstens der Energieübertragungsinformation) ist erfindungsgemäß insbesondere als eine spezifisch auf das zweite Telekommunikations¬end¬gerät gerichtete (dezidierte) Nachricht ausgebildet (insbesondere für den Fall, dass die Telekommunikations¬end¬geräte (d.h. vorliegend das erste und zweite Telekommunikations¬end¬gerät) bereits zeitlich vor der Übertragung der die Energieübertragungsinformation umfassende Nachricht miteinander kommuniziert haben, sich also "kennen") oder aber als eine (an alle im Rahmen einer gegebenen Situation der Funksignalausbreitung erreichbaren Telekommunikationsend¬geräte zu sendende) sogenannte Rundfunknachricht (broadcast-Nachricht bzw. broadcast message).
-- Nach der im ersten Verfahrensschritt vom ersten Telekommunikations¬end¬gerät ausgesandten Nachricht wird erfindungsgemäß entweder ein zweiter Verfahrensschritt oder ein dritter Verfahrensschritt durchgeführt. Ob der zweite Verfahrenssschritt oder der dritte Verfahrensschritt (oder keiner von beiden, sondern beispielsweise ein vierter Verfahrensschritt) durchgeführt wird, wird seitens des zweiten Telekommunikationsend¬geräts (d.h. des durch die Nachricht angefragten Telekommunikations¬end¬geräts) getroffen. Im zweiten Verfahrensschritt wird über die Energie¬übertragungs¬schnittstelle des ersten Telekommunikationsendgeräts und über die Energie¬übertragungsschnittstelle des zweiten Telekommunikations¬end¬geräts der Ladezustand des Energiespeichers des ersten Telekommunikations¬end¬geräts erhöht, d.h. der Ladezustand des Energiespeichers des ersten Telekommunikations¬end¬geräts wird auf Kosten des Ladezustand des Energiespeiches des zweiten Telekommunikationsend¬geräts erhöht. Dies ist beispielsweise deshalb möglich, weil abzusehen ist, dass der Ladezustand des Energiespeichers des zweiten Telekommunikations¬end¬geräts (insbesondere angesichts der prognostizierten noch zu erfüllenden Belastungen, etwa auf einer Transportstrecke) derart ausreichend bemessen ist, dass es sich das zweite Telekommunikations¬end¬gerät "leisten kann" einen Teil der im Energiespeicher vorhandenen Energie an das erste Telekommunikations¬end¬gerät abzugeben, wodurch beispielsweise insgesamt ein Vorteil erzielbar ist, weil beide Geräte beispielsweise bis zum Ende eines vorgesehenen Transportweges funktionsfähig sind. Im dritten Verfahrensschritt wird über die Weitverkehrskommunikationsschnittstelle des zweiten Telekommunikations¬end¬geräts wenigstens eine Nachricht - für das erste Telekommunikations¬end¬gerät- zwischen dem Telekommunikationsnetz und dem zweiten Telekommunikationsend¬gerät übertragen. Der dritte Verfahrensschritt entspricht somit einer Auffanglösung für den Fall, dass das zweite Telekommunikations¬end¬gerät nicht in der Lage ist, Energie auf das erste Telekommunikations¬end¬gerät zu übertragen (etwa weil der Ladezustand ebenfalls als eher unzureichend eingestuft wird oder aber weil (angesichts der noch zu erfüllenden Belastungen, etwa auf einer Transportstrecke) kein Energieüberschuss prognostiziert wird. In einer solchen Situation ist es erfindungsgemäß vorgesehen, dass eine Aktivierung insbesondere der Weitverkehrs¬kommunikations¬schnittstelle des zweiten Telekommunikationsend¬geräts mit Blick auf eine oder mehrere Datenübertragungen zum oder vom Telekommunikationsnetz vorgenommen wird, wobei diese Datenübertragungen durch das zweite Telekommunikations¬end¬gerät entweder ausschließlich für das erste Telekommunikations¬end¬gerät oder aber auch für das erste Telekommunikationsend¬gerät (d.h. sowohl für das erste als auch für das zweite Telekommunikationsend¬gerät) erfolgen. Insbesondere für diese zweite Fallkonstellation (der Datenübertragung sowohl für das erste als auch für das zweite Telekommunikationsend¬gerät) ist es erfindungsgemäß vorteilhaft möglich, die in den Energiespeichern des ersten und zweiten Telekommunikations¬end¬geräs vorhandene Energie besonders effizient zu nutzen.

Erfindungsgemäß ist es bevorzugt, dass - neben dem ersten Telekommunikationsendgerät und dem zweiten Telekommunikations¬end¬gerät - ein drittes Telekommunikationsendgerät eine Weitverkehrskommunikationsschnittstelle, eine Nahbereichskommunikationsschnittstelle und einen Energiespeicher zur Speicherung elektrischer Energie aufweist, wobei das Verfahren in einem auf den ersten Verfahrensschritt nachfolgenden vierten Verfahrensschritt vorsieht, dass, insbesondere für den Fall, dass weder der zweite noch der dritte Verfahrensschritt durchgeführt wird, über die Weitverkehrskommunikationsschnittstelle des dritten Telekommunikations¬end¬geräts wenigstens eine Nachricht - für das erste Telekommunikations¬end¬gerät - zwischen dem Telekommunikationsnetz und dem dritten Telekommunikationsend¬gerät übertragen wird.

Hierdurch ist es erfindungsgemäß in vorteilhafter Weise beispielsweise möglich, dass seitens des ersten Telekommunikations¬end¬geräts das zweite Telekommunikations¬end¬gerät angefragt wird und - sofern das zweite Telekommunikations¬end¬gerät weder, gemäß dem zweiten Verfahrensschritt, eine Übertragung von elektrischer Energie in den Energiespeicher des ersten Telekommunikations¬end¬geräts noch, gemäß dem dritten Verfahrensschritt, eine Weitverkehrsverbindung mit dem Telekommunikationsnetz für das erste Telekommunikations¬end¬gerät aufbaut - anschließend (oder auch parallel dazu) zumindest die Weitverkehrsverbindung, für das erste Telekommunikations¬end¬gerät, mit dem Telekommunikationsnetz über das dritte Telekommunikations¬end¬gerät aufgebaut wird.

Erfindungsgemäß ist es ferner bevorzugt, dass zeitlich vor dem dritten Verfahrensschritt ein Informationsaustausch zwischen dem ersten und zweiten Telekommunikations¬end¬gerät und/oder zeitlich vor dem vierten Verfahrensschritt ein Informationsaustausch bzw. ein Datenaustausch zwischen dem ersten und dritten Telekommunikations¬end¬gerät erfolgt, wobei sowohl der Informationsaustausch zwischen dem ersten und zweiten Telekommunikations¬end¬gerät als auch der Informationsaustausch zwischen dem ersten und dritten Telekommunikations¬end¬gerät mittels der jeweiligen Nahbereichs¬kommunikations¬schnittstellen der Telekommunikationsend¬geräte erfolgt.

Hierdurch ist es erfindungsgemäß vorteilhaft möglich, dass eine Nachricht oder mehrere Nachrichten zwischen dem ersten und zweiten Telekommunikationsendgerät oder zwischen dem ersten und dem dritten Telekommunikations¬end¬gerät, insbesondere gemäß eines speziellen Algorithmus, ausgetauscht werden. Dieser Datenaustausch - erfindungsgemäß insbesondere in verschlüsselter Form - erfolgt erfindungsgemäß insbesondere mittels einer kurzreichweitigen Kommunikationsverbindung zwischen den jeweiligen Nahbereichs¬kommunikations¬schnittstellen der betreffenden Telekommunikations¬end¬geräten, insbesondere über ein Verfahren gemäß NFC (Near Field Communication), RFID (Radio Frequency IDentification), Bluetooth, insbesondere Bluetooth Low Energy, WLAN (Wireless Local Area Network), WiMAX.

Es ist ferner erfindungsgemäß bevorzugt, dass in einem zeitlich vor oder während des zweiten Verfahrensschritts durchgeführten fünften Verfahrensschritts, über die Energieübertragungsschnittstelle des zweiten Telekommunikationsendgeräts einerseits und über eine Energiequelle oder eine Energie¬übertragungsschnittstelle eines weiteren Telekommunikations¬end¬geräts andererseits der Ladezustand des Energiespeichers des zweiten Telekommunikations¬end¬geräts erhöht wird.

Somit ist es erfindungsgemäß vorteilhaft möglich, dass einer Gruppe von Telekommunikations¬end¬geräten zusätzliche elektrische Energie von außen zugeführt werden kann.

Erfindungsgemäß ist es ferner auch bevorzugt, dass die Telekommunikations¬end¬geräte als Teil von logistischen Versandeinheiten in einer vorgegebenen räumlichen Anordnung relativ zueinander positioniert sind, insbesondere übereinander und/oder nebeneinander, wobei eine Übertragung von Energie zur Erhöhung des Ladezustands des Energiespeichers eines der Telekommunikations¬end¬geräte insbesondere zwischen zwei direkt benachbart zueinander angeordneten Telekommunikationsendgeräten erfolgt.

Hierdurch ist es erfindungsgemäß vorteilhaft möglich, dass die Ausfallsicherheit von Telekommunikations¬end¬geräten erhöht werden kann und insbesondere mit einem Telekommunikations¬end¬gerät versehene Versandeinheiten quasi kontinuierlich überwachbar sind und somit eine lückenlose Sendungsverfolgung möglich ist.

Ferner ist es erfindungsgemäß auch bevorzugt, dass in oder an einem Außenbereich der räumlichen Anordnung der Versandeinheiten eine Energiequelle oder eine Energieübertragungs¬schnittstelle angeordnet ist, wobei in einem ersten Energieladeschritt der Energiespeicher des direkt benachbart zu der Energiequelle oder Energie¬übertragungs¬schnittstelle angeordneten Telekommunikations¬end¬geräts oder die Energiespeicher der direkt benachbart zu der Energiequelle oder Energie¬übertragungs¬schnittstelle angeordneten Telekommunikations¬end¬geräte geladen werden und wobei in einem zweiten Energieladeschritt der Energiespeicher des nächsten, weiter von der Energiequelle oder Energie¬übertragungs¬schnittstelle entfernt angeordneten Telekommunikations¬end¬geräts oder die Energiespeicher der nächsten, weiter von der Energiequelle oder Energie¬übertragungs¬schnittstelle entfernt angeordneten Telekommunikations¬end¬geräte geladen werden.

Hierdurch ist es erfindungsgemäß vorteilhaft möglich, dass in einfacher Weise zusätzliche elektrische Energie einer sich in einer räumlichen Anordnung befindlichen Mehrzahl von Telekommunikations¬end¬geräten zugeführt werden kann, ohne dass zwingend alle Telekommunikations¬end¬geräte beispielsweise mit Kontakten oder Zuleitungen versehen werden müsste oder umfangreiche Änderungen an bestehenden Logistikvolumina - etwa Container oder Lastkraftwagenaufbauten - erfolgen müssten: Die zusätzliche (von außerhalb der räumlichen Anordnung der Telekommunikationsendgeräte kommende) elektrische Energie kann somit sogar auch noch solchen Telekommunikations¬end¬geräten zur Verfügung gestellt werden, die vergleichsweise weit von der Energiequelle oder Energie¬übertragungs¬schnittstelle des Logistikvolumens entfernt angeordnet sind.

Erfindungsgemäß ist es ferner auch bevorzugt, dass die Telekommunikations¬end¬geräte als Teil von logistischen Versandeinheiten in einer vorgegebenen räumlichen Anordnung relativ zueinander positioniert sind, insbesondere übereinander und/oder nebeneinander, wobei der Informationsaustausch zwischen dem ersten und zweiten Telekommunikations¬end¬gerät zeitlich vor dem dritten Verfahrensschritt und/oder der Informationsaustausch zwischen dem ersten und dritten Telekommunikations¬end¬gerät zeitlich vor dem vierten Verfahrensschritt insbesondere zwischen zwei Telekommunikationsendgeräten erfolgt, die in räumlicher Nähe zueinander positioniert sind, insbesondere
-- direkt benachbart zueinander angeordnet sind oder
-- in diagonaler Richtung bezüglich der räumlichen Anordnung der Versandeinheiten direkt benachbart zueinander angeordnet sind oder
-- mit höchstens einer Zwischenlage von Versandeinheiten angeordnet sind oder
-- mit höchstens zwei Zwischenlagen von Versandeinheiten angeordnet sind oder
-- mit höchstens drei Zwischenlagen von Versandeinheiten angeordnet sind oder
-- mit höchstens vier Zwischenlagen von Versandeinheiten angeordnet sind oder
-- mit höchstens fünf Zwischenlagen von Versandeinheiten angeordnet sind.

Somit ist es erfindungsgemäß vorteilhaft möglich, dass jedes Telekommunikations¬end¬gerät der vorgegebenen räumlichen Anordung eine Mehrzahl von anderen Telekommunikations¬end¬geräten - über die Nahbereichskommunikationsschnittstelle erreichen kann.

Erfindungsgemäß ist es ferner auch bevorzugt, dass die Erhöhung des Ladezustands des Energiespeichers des ersten Telekommunikations¬end¬geräts mittels der jeweiligen Energieübertragungsschnittstellen des ersten und zweiten Telekommunikationsendgeräts mittels induktiver Energieübertragung und/oder mittels resonanter Energieübertragung erfolgt.

Ein weiterer Gegenstand der vorliegenden Erfindung betrifft ein System zur Kommunikation zwischen wenigstens einem ersten Telekommunikationsendgerät und einem zweiten Telekommunikationsendgerät, wobei das System das erste Telekommunikations¬end¬gerät, das zweite Telekommunikations¬end¬gerät und das Telekommunikationsnetz umfasst, wobei das erste Telekommunikationsendgerät und das zweite Telekommunikationsendgerät jeweils eine Weitverkehrskommunikationsschnittstelle und eine Nahbereichskommunikationsschnittstelle aufweist, wobei die Weitverkehrskommunikationsschnittstellen des ersten und zweiten Telekommunikationsendgeräts für einen Datenaustausch mit einem Telekommunikationsnetz konfiguriert sind, wobei die Nahbereichskommunikationsschnittstellen des ersten und zweiten Telekommunikationsendgeräts für einen Datenaustausch zwischen dem ersten und dem zweiten Telekommunikationsendgerät konfiguriert sind, wobei das erste Telekommunikationsendgerät und das zweite Telekommunikationsendgerät jeweils einen Energiespeicher zur Speicherung elektrischer Energie sowie jeweils eine Energieübertragungsschnittstelle aufweist, wobei die Energie¬übertragungs¬schnittstelle des ersten und zweiten Telekommunikationsendgeräts sowohl zur Übertragung elektrischer Energie zum Energiespeicher des ersten und/oder zweiten Telekommunikationsendgeräts hin als auch zur Übertragung elektrischer Energie vom Energiespeicher des ersten und/oder zweiten Telekommunikationsend¬geräts weg konfiguriert sind, wobei das System für den Fall eines gegenüber einem vorgegebenen Referenzladezustand geringeren Ladezustands des Energiespeichers des ersten Telekommunikations¬end¬geräts derart konfiguriert ist, dass:
-- über die Nahbereichskommunikationsschnittstelle des ersten Telekommunikationsend¬geräts und über die Nahbereichskommunikationsschnittstelle des zweiten Telekommunikationsend¬geräts eine eine Energieübertragungsinformation umfassende Nachricht zum zweiten Telekommunikations¬end¬gerät übertragen wird, wobei die Energieübertragungsinformation eine Anfrage zur Übertragung zusätzlicher Energie in den Energiespeicher des ersten Telekommunikations¬end¬geräts umfasst, und
-- entweder über die Energie¬übertragungs¬schnittstelle des ersten Telekommunikationsendgeräts und über die Energie-übertragungsschnittstelle des zweiten Telekommunikations¬end¬geräts der Ladezustand des Energiespeichers des ersten Telekommunikations¬end¬geräts erhöht wird,
-- oder über die Weitverkehrskommunikationsschnittstelle des zweiten Telekommunikations¬end¬geräts wenigstens eine Nachricht - für das erste Telekommunikations¬end¬gerät - zwischen dem Telekommunikationsnetz und dem zweiten Telekommunikationsend¬gerät übertragen wird.

Mittels eines solchen Systems ist es erfindungsgemäß in vorteilhafter Weise möglich, dass die relative Anzahl von Ausfällen solcher Telekommunikations¬end¬geräte deutlich verringert werden kann.

Ferner bezieht sich die vorliegende Erfindung auch auf ein Computerprogramm mit Programmcodemitteln, mit deren Hilfe die Schritte des erfindungsgemäßen Verfahrens durchführbar sind, wenn das Computerprogramm auf einer programmierbaren Einrichtung, insbesondere als Teil des Systems, oder auf dem ersten oder zweiten Telekommunikationsendgerät ausgeführt wird.

Weiterhin ist Gegenstand der vorliegenden Erfindung ein Computerprogrammprodukt mit einem computerlesbaren Medium und einen auf dem computerlesbaren Medium gespeicherten Computerprogramm mit Programmcodemitteln, die dazu geeignet sind, dass die Schritte des erfindungsgemäßen Verfahrens durchführbar sind, wenn das Computerprogramm auf einer programmierbaren Einrichtung, insbesondere als Teil des Systems, oder auf dem ersten oder zweiten Telekommunikationsendgerät ausgeführt wird.

Weitere Einzelheiten, Merkmale und Vorteile der Erfindung ergeben sich aus den Zeichnungen, sowie aus der nachfolgenden Beschreibung von bevorzugten Ausführungsformen anhand der Zeichnungen. Die Zeichnungen illustrieren dabei lediglich beispielhafte Ausführungsformen der Erfindung, welche den wesentlichen Erfindungsgedanken nicht einschränken.

### Kurze Beschreibung der Zeichnungen

- **Figur 1**: zeigt schematisch eine Darstellung bisher bekannter Verfahren, um eine Sendungsnachverfolgung von Paketen zu realisieren.
- **Figur 2**: zeigt schematisch eine Darstellung herkömmlicherweise bekannter Verfahren zum Aufladen von Energiespeichern mit elektrischer Energie.
- **Figur 3**: zeigt schematisch ein erfindungsgemäßes erstes und zweites Telekommunikations¬end¬gerät mit jeweils einer Weitverkehrs¬kommunikations¬schnittstelle, einer Nahbereichs¬kommunikations¬schnittstelle, einem Energiespeicher und einer Energie¬übertragungsschnittstelle.
- **Figur 4**: zeigt schematisch das erfindungsgemäße erste und zweite Telekommunikations¬end¬gerät sowie ein drittes Telekommunikations¬end¬gerät mit jeweils der Weitverkehrs¬kommunikations¬schnittstelle, der Nahbereichskommunikations¬schnittstelle, dem Energiespeicher und der Energie¬übertragungsschnittstelle, wobei schematisch ein Ladevorgang des ersten Telekommunikations¬end¬geräts durch das zweite Telekommunikations¬end¬gerät dargestellt ist.
- **Figur 5**: zeigt schematisch mehrere Telekommunikationsend¬geräte mit verschiedenen Konfigurationen von Energieübertragungsschnittstellen bzw. mit verschiedenen Konfigurationen von Spulen, die Teil der Energieübertragungs¬schnittstellen sind.
- **Figur 6**: zeigt schematisch mehrere Telekommunikationsend¬geräte mit verschiedenen Konfigurationen von Energieübertragungsschnittstellen basierend auf verschiedenen Methoden zum Laden des Energiespeichers.
- **Figuren 7 und 8**: zeigen schematisch räumliche Anordnungen mehrerer Telekommunikationsend¬geräte bzw. mehrerer Versandeinheiten, wobei eines der Telekommunikationsendgeräte zumindest potentiell Energie von einer Mehrzahl von anderen Telekommunikationsendgeräten zu erhalten in der Lage ist.
- **Figur 9**: zeigt schematisch mehrere räumliche Anordnungen mehrerer Telekommunikationsend¬geräte bzw. mehrerer Versandeinheiten, wobei eine bezüglich der räumlichen Anordnung äußere Energiequelle sukzessive zur Aufladung der jeweiligen Energiespeicher der verschiedenen Telekommunikations¬end¬geräte führt.
- **Figur 10**: zeigt schematisch ein Ablaufdiagramm gemäß eines Ausführungsbeispiels des erfindungsgemäßen Verfahrens.

### Ausführungsformen der Erfindung

Die vorliegende Erfindung wird mit Bezug auf besondere Ausführungen und mit Bezug zu den beiliegenden Zeichnungen beschrieben, wobei jedoch die Erfindung nicht auf diese Ausführungen und auf diese Zeichnungen beschränkt ist, sondern durch die Patentansprüche bestimmt ist. Die Zeichnungen sind nicht beschränkend zu. In den Zeichnungen können zu Darstellungszwecken bestimmte Elemente vergrößert bzw. übertrieben sowie nicht maßstabsgerecht dargestellt sein.

Falls nichts anderes spezifisch angegeben wird, umfasst die Verwendung eines unbestimmten oder bestimmten Artikels mit Bezug auf ein Wort in der Einzahl, beispielsweise "ein", "eine", "eines", "der", "die", "das", auch die Mehrzahl eines solchen Wortes. Die Bezeichnungen "erster", "erste", "erstes", "zweiter", "zweite", "zweites" und so fort in der Beschreibung und in den Ansprüchen werden zur Unterscheidung zwischen ähnlichen oder zu unterscheidenden gleichen Elementen verwendet und nicht zwingend zur Beschreibung einer zeitlichen oder sonstigen Abfolge. Die derart benutzten Begriffe sind grundsätzlich als unter entsprechenden Bedingungen austauschbar anzusehen.

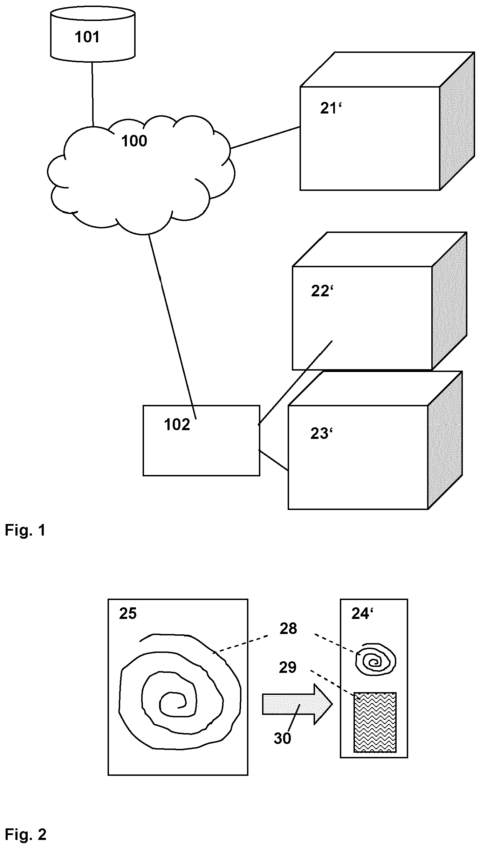

In der Figur 1 ist schematisch eine Darstellung bisher bekannter Verfahren dargestellt, mit denen eine Sendungsnachverfolgung von Paketen realisierbar ist. Ein erstes Paket 21', welches beispielsweise ein Telekommunikations¬end¬gerät in Form eines Machine-to-Machine Geräts mit einer Weitverkehrs¬kommunikations¬schnittstelle aufweist, kann dadurch auf seinem Transportweg verfolgt werden, dass über die Weitverkehrskommunikationsschnittstelle eine Verbindung zu dem Telekommunikationsnetz 100 bzw. vom Telekommunikationsnetz 100 zu dem Telekommunikationsend¬gerät aufgebaut wird. Selbstverständlich ist es für die Durchführung der Sendungsnachverfolgung erforderlich, dass am Ort des ersten Pakets 21' eine Netzabdeckung des Telekommunikationsnetz 100 vorliegt bzw. eine Roaming-Vereinbarung anwendbar ist. Ein zweites Paket 22' weist beispielsweise ein aktives RFID-Element, insbesondere einen RFID Transponder, auf, wobei das RFID-Element mit einer Scannereinheit 102 - welche ihrerseits die Möglichkeit zum Datenaustausch mit dem Telekommunikationsnetz 100, insbesondere über eine Weitverkehrs¬kommunikations¬schnittstelle, aufweist bzw. bereitstellt - zu kommunizieren in der Lage ist. Ferner weist ein drittes Paket 23' ein passives RFID-Element und/oder einen Strichkode auf, so dass ebenfalls über eine Verbindung mit der Scannereinheit 102 Informationen zum Telekommunikationsnetz 100 übertragbar sind.

Das Telekommunikationsnetz 100 weist insbesondere auf bzw. ihm ist zugeordnet ein sogenannter AAA-Server bzw. ein M2M-Server 101, wobei der AAA-Server bzw. der M2M-Server 101 eine Datenbank aufweist, in welcher beispielsweise Informationen zur Berechtigung von Telekommunikations¬end¬geräten vorliegen.

Die nicht über eine Weitverkehrs¬kommunikations¬schnittstelle verfügenden zweiten und dritten Pakete 22', 23' können nicht weltweit (zumindest nicht ohne das Vorhandensein der Scannereinheit 102 und damit auch nicht ohne menschliche Interaktion) nachverfolgt werden. Das zweite und dritte Paket 22', 23' können lediglich an bestimmten Stellen (sogenannte Zentren bzw. "hubs") dadurch nachverfolgt werden, dass das zweite bzw. dritte Paket 22', 23' gescannt wird.

In der Figur 2 ist schematisch ein herkömmlicherweise bekanntes Verfahren zum Aufladen von Energiespeichern mit elektrischer Energie dargestellt. Ein elektrisches und/oder elektronisches Gerät 24', beispielsweise ein Telekommunikations¬end¬gerät und/oder ein Machine-to-Machine Gerät, weist einen Energiespeicher 29 und eine Energieübertragungsschnittstelle auf. Über ein Ladegerät 25 kann der Energiespeicher 29 des elektrischen und/oder elektronischen Geräts 24' über eine weitere Energie¬übertragungs¬schnittstelle (des Ladegeräts 25) mit elektrischer Energie geladen werden. Hierzu weisen typischerweise die Energieübertragungsschnittstellen wenigstens eine Spule 28 auf. Der Energiefluss vom Ladegerät 25 zum elektrischen und/oder elektronischen Gerät 25 ist in Figur 2 schematisch durch einen Pfeil und das Bezugszeichen 30 dargestellt. Die Energieübertragung ist herkömmlicherweise insbesondere derart vorgesehen, dass die Wechselwirkung der beiden Energieübertragungsschnittstellen auf einem induktiven Vorgang bzw. einer induktiven Wechselwirkung (inductive charging) beruht und/oder dass die Wechselwirkung der beiden Energie¬übertragungs¬schnittstellen auf einem Resonanzphänomen (resonant charging) beruht.

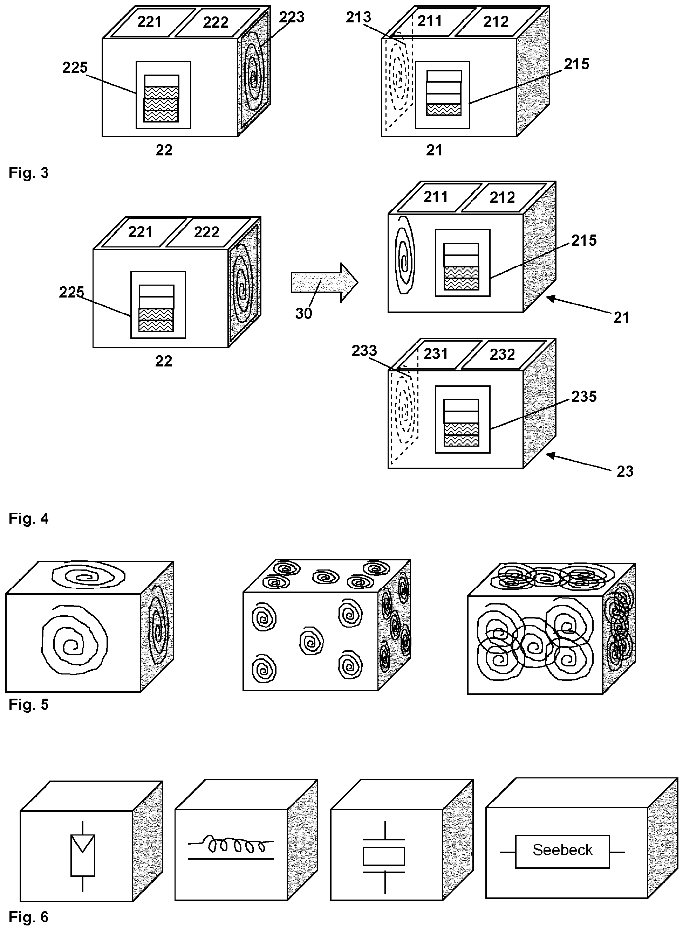

In der Figur 3 ist schematisch ein erfindungsgemäßes erstes und zweites Telekommunikations¬end¬gerät 21, 22 mit jeweils einer Weitverkehrskommunikationsschnittstelle, einer Nahbereichs¬kommunikations¬schnittstelle, einem Energiespeicher und einer Energie¬übertragungsschnittstelle dargestellt.

In der Figur 4 ist schematisch das erfindungsgemäße erste und zweite Telekommunikations¬end¬gerät 21, 22 sowie ein drittes Telekommunikations¬end¬gerät 23 dargestellt. Ein Ladevorgang des ersten Telekommunikations¬end¬geräts 21 durch das zweite Telekommunikations¬end¬gerät 22 ist schematisch durch einen Pfeil und das Bezugszeichen 30 dargestellt.

In den Figuren 3 und 4 weisen die Telekommunikations¬end¬geräte 21, 22, 23 jeweils eine Weitverkehrskommunikationsschnittstelle, eine Nahbereichskommunikationsschnittstelle, einen Energiespeicher und eine Energie¬übertragungsschnittstelle auf. Hierbei weist das erste Telekommunikations¬end¬gerät 21, eine erste Weitverkehrskommunikationsschnittstelle 211, eine erste Nahbereichskommunikationsschnittstelle 212, einen ersten Energiespeicher 215 und eine erste Energieübertragungsschnittstelle 213 auf; das zweite Telekommunikations¬end¬gerät 22 weist eine zweite Weitverkehrskommunikationsschnittstelle 221, eine zweite Nahbereichskommunikationsschnittstelle 222, einen zweiten Energiespeicher 225 und eine zweite Energieübertragungsschnittstelle 223 auf; das dritte Telekommunikations¬end¬gerät 23 weist eine dritte Weitverkehrskommunikationsschnittstelle 231, eine dritte Nahbereichskommunikationsschnittstelle 232, einen dritten Energiespeicher 235 und eine dritte Energieübertragungsschnittstelle 233 auf.

Gemäß der vorliegenden Erfindung ist es vorgesehen, dass bei einer Mehrzahl von betrachteten Telekommunikations¬end¬geräten 21, 22, 23 (bzw. von Versandeinheiten, die Telekommunikations¬end¬geräte aufweisen) der Anteil solcher Telekommunikations¬end¬geräte, die ihre Funktionalität aufgrund von zu geringer Akkukapazität nicht erfüllen können, reduziert wird. Dies wird erfindungsgemäß durch die Implementierung eines kooperativen Verhaltens der Telekommunikations¬end¬geräte bewirkt, d.h. wenn das erste Telekommunikations¬end¬gerät 21 feststellt, dass der (erste) Energiespeicher 215 zu wenig geladen ist (d.h. einen gegenüber einem vorgegebenen Referenzladezustand geringeren Ladezustand aufweist), wird in einem ersten Verfahrensschritt über die (erste) Nahbereichskommunikationsschnittstelle 21 des und über die (zweite) Nahbereichskommunikationsschnittstelle 222 eine eine Energieübertragungsinformation umfassende Nachricht zum zweiten Telekommunikationsendgerät 22 (und/oder zu einem weiteren Telekommunikationsendgerät, beispielsweise zum dritten Telekommunikations¬end¬gerät 23) übertragen, wobei die Energieübertragungsinformation eine Anfrage zur Übertragung zusätzlicher Energie in den (ersten) Energiespeicher 215 umfasst. Anschließend an den ersten Verfahrensschritt wird entweder ein zweiter Verfahrensschritt oder aber ein dritter Verfahrensschritt durchgeführt. Erfindungsgemäß ist es bevorzugt ebenfalls vorgesehen, dass anschließend an den ersten Verfahrensschritt entweder der zweite Verfahrensschritt oder der dritte Verfahrensschritt oder ein vierter Verfahrensschritt durchgeführt wird. Hierbei wird im zweiten Verfahrensschritt über die (erste) Energie¬übertragungsschnittstelle 213 (des ersten Telekommunikationsendgeräts 21) und über die (zweite) Energie¬übertragungsschnittstelle 223 (des zweiten Telekommunikations¬end¬geräts 22) der Ladezustand des (ersten) Energiespeichers 215 erhöht. Im dritten Verfahrensschritt wird über die (zweite) Weitverkehrskommunikationsschnittstelle 221 (des zweiten Telekommunikations¬end¬geräts 22) wenigstens eine Nachricht - für das erste Telekommunikations¬end¬gerät 21 - zwischen dem Telekommunikationsnetz 100 und dem zweiten Telekommunikationsend¬gerät 22 übertragen. Im vierten Verfahrensschritt wird, insbesondere für den Fall, dass weder der zweite noch der dritte Verfahrensschritt durchgeführt wird, über die (dritte) Weitverkehrskommunikationsschnittstelle 231 (des dritten Telekommunikations¬end¬geräts 23) wenigstens eine Nachricht - für das erste Telekommunikations¬end¬gerät 21 - zwischen dem Telekommunikationsnetz 100 und dem dritten Telekommunikationsend¬gerät 23 übertragen.

Gemäß einer Ausführungsvariante ist es erfindungsgemäß hierbei vorgesehen, dass die im ersten Verfahrensschritt (vom ersten Telekommunikationsendgerät 21) an das zweite Telekommunikationsendgerät 22 übertragene, die Energieübertragungsinformation umfassende Nachricht auch an das dritte Telekommunikations¬end¬gerät 23 übertragen wurde bzw. vom dritten Telekommunikations¬end¬gerät 23 empfangen wurde. Alternativ zu einer solchen Ausführungsvariante ist es erfindungsgemäß vorgesehen, dass die im ersten Verfahrensschritt (vom ersten Telekommunikationsendgerät 21) an das zweite Telekommunikationsendgerät 22 übertragene Nachricht entweder nicht an das dritte Telekommunikations¬end¬gerät 23 übertragen oder nicht vom dritten Telekommunikations¬end¬gerät 23 empfangen wird und dass mittels einer weiteren, die Energieübertragungsinformation (oder eine weitere Energieübertragungsinformation) umfassenden Nachricht (vom ersten Telekommunikations¬end¬gerät 21 an das dritte Telekommunikations¬end¬gerät 23) die Durchführung des vierten Verfahrensschritts vorbereitet wird.

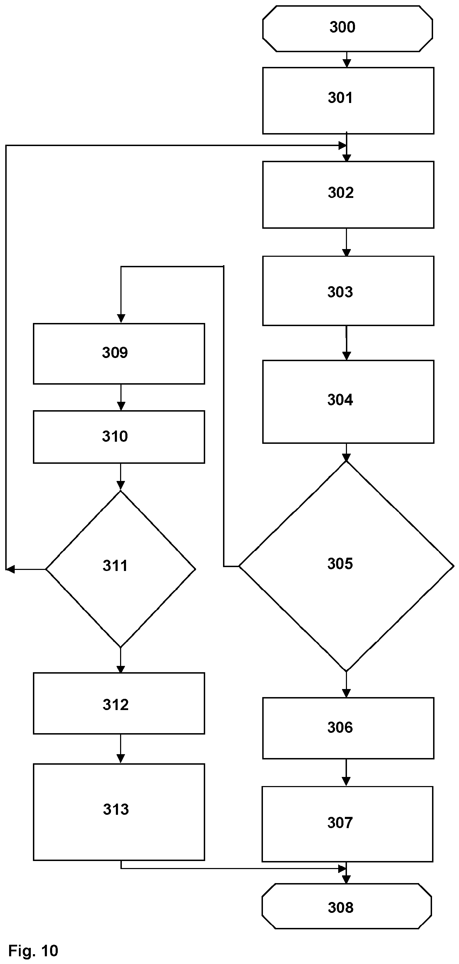

Erfindungsgemäß wird eine neue Art des multi-dimensionalen drahtlosen Aufladens eines Energiespeichers eines Telekommunikations¬end¬geräts, insbesondere eines Machine-to-Machine-Geräts, vorgeschlagen, wobei das Telekommunikationsendgerät typischerweise mit einem Mobilfunknetz (insbesondere der zweiten und/oder dritten und/oder vierten Generation und/oder einer weiteren Generation) verbunden ist. Gemäß der erfindungsgemäßen Art des Aufladens des Energiespeichers wird ein Prozess des induktiven und/oder resonanten Ladens (insbesondere mittels Spulen) gemäß eines vordefinierten Verfahrens verwendet, welches in Figur 10 schematisch dargestellt ist und später näher erläutert wird.

In der Figur 5 sind schematisch mehrere Telekommunikationsend¬geräte dargestellt, wobei die Telekommunikations¬end¬geräte verschiedene Konfigurationen von Energieübertragungsschnittstellen aufweisen bzw. verschiedene Konfigurationen von Spulen aufweisen, die Teil der Energieübertragungs¬schnittstellen sind. Insbesondere kann es vorgesehen sein, dass ein Telekommunikations¬end¬gerät lediglich eine Spule aufweist oder aber eine Mehrzahl von Spulen, jedoch auf einer Seitenfläche lediglich eine Spule aufweist oder aber eine Mehrzahl von Spulen auf einer oder auf mehreren Seitenflächen aufweist.

In der Figur 6 sind schematisch mehrere Telekommunikationsend¬geräte mit verschiedenen Konfigurationen von Energieübertragungsschnittstellen dargestellt, wobei die verschiedenen Energie¬übertragungs¬schnittstellen auf verschiedenen Methoden zum Laden von Energiespeichern basieren, beispielsweise basierend auf der Nutzung von Solarenergie, insbesondere Photovoltaik, (Abbildung ganz links in Figur 6) bzw. basierend auf der Nutzung von elektromagnetischer Induktion (Abbildung Mitte links in Figur 6) bzw. basierend auf der Nutzung des piezoelektrischen Effekts (bzw. von Piezoenergie, piezo energy) (Abbildung Mitte rechts in Figur 6) bzw. basierend auf der Nutzung des Seebeckeffekts (Abbildung ganz rechts in Figur 6).

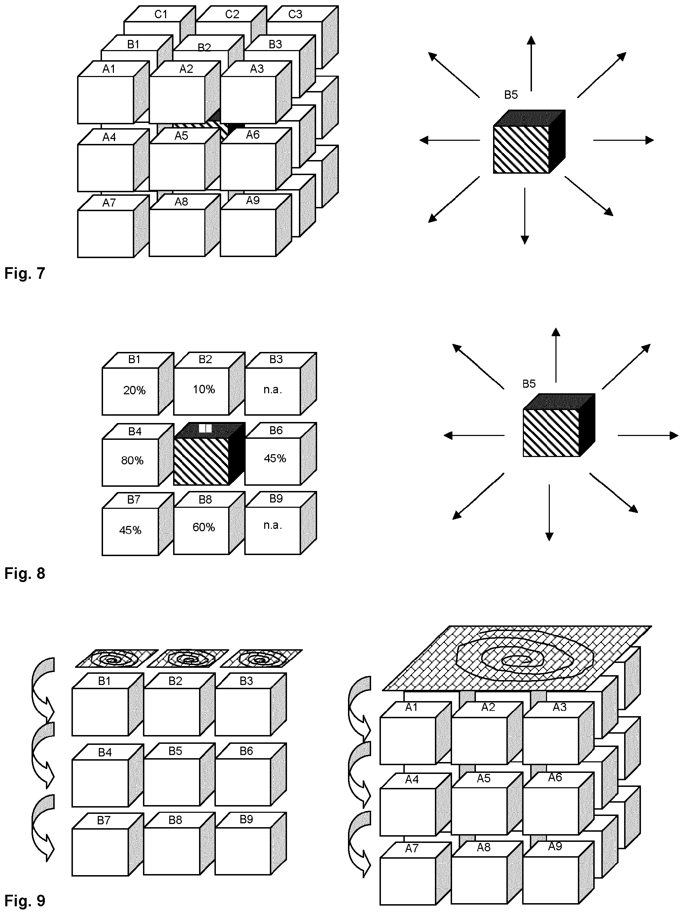

In den Figuren 7 und 8 sind schematisch räumliche Anordnungen mehrerer Telekommunikationsend¬geräte bzw. mehrerer Versandeinheiten dargestellt, wobei eines der Telekommunikationsendgeräte zumindest potentiell Energie von einer Mehrzahl von anderen Telekommunikationsendgeräten zu erhalten in der Lage ist. Hierbei entspricht die räumliche Anordnung der Telekommunikations¬end¬geräte gemäß der Figur 8 (d.h. in einer zweidimensionalen Anordnung) einer vereinfachten Situation gegenüber der Anordnung gemäß der Figur 7. Dies bedeutet, dass der gesamte später näher zu erläuternde Prozess (insbesondere umfassend die Schritte: Suchen, Initiieren, Legitimierung, Ladevorgang, Benachrichtigung) in räumlicher Beziehung zwischen den Machine-to-Machine Geräten bzw. den Telekommunikations¬end¬geräten erfolgt. In Figur 7 ist eine dreidimensionale räumliche Anordnung schematisch dargestellt. In einer ersten (als näher beim Betrachter befindlich dargestellten) Ebene ist eine Anzahl von Versandeinheiten, welche erfindungsgemäß jeweils ein Telekommunikations¬end¬gerät aufweisen, mit den Bezeichnungen A1, A2, A3, A4, A5, A6, A7, A8 und A9 bezeichnet. In einer mittleren Ebene ist eine Anzahl von Versandeinheiten mit den Bezeichnungen B1, B2, B3, B4, B5, B6, B7, B8 und B9 bezeichnet, wobei jedoch die Bezeichnungen B4 bis B9 nicht sichtbar sind. In einer hinteren (als weiter vom Betrachter entfernt befindlich dargestellten) Ebene ist eine Anzahl von Versandeinheiten mit den Bezeichnungen C1, C2, C3, C4, C5, C6, C7, C8 und C9 bezeichnet, wobei jedoch die Bezeichnungen C4 bis C9 nicht sichtbar sind. Im rechten Teil der Figur 7 ist schematisch die Versandeinheit B5 und eine Mehrzahl von möglichen Richtungen bzw. Verbindungen zur Übertragung von elektrischer Energie schematisch dargestellt. In Figur 8 ist eine zwei dimensionale räumliche Anordnung (beispielsweise als Ausschnitt der Anordnung nach Figur 7) schematisch dargestellt, wobei in Figur 8 beispielsweise die mittlere Ebene, d.h. die Versandeinheiten B1, B2, B3, B4, B5, B6, B7, B8 und B9, dargestellt ist und wobei zu jeder der Versandeinheiten auch der Ladezustand des Energiespeichers schematisch angegeben ist, beispielsweise 20% für B1, 10% für B2, 80% für B4, 45% für B6, 45% für B7, 60% für B8. Für B3 und B9 sind keine Angaben vorhanden, d.h. bei der Kommunikation zwischen der Versandeinheit B5 (bzw. des mit dieser Versandeinheit verbundenen Telekommunikations¬end¬geräts) und den Nachbarelementen konnte der Ladezustand nicht ermittelt werden.

In der Figur 9 sind schematisch mehrere räumliche Anordnungen mehrerer Telekommunikationsend¬geräte bzw. mehrerer Versandeinheiten dargestellt, wobei eine bezüglich der räumlichen Anordnung äußere Energiequelle sukzessive zur Aufladung der jeweiligen Energiespeicher der verschiedenen Telekommunikations¬end¬geräte führt. Beispielhaft sind jeweils im oberen Teil jeder der beiden (links bzw. rechts in Figur 9) dargestellten Anordnungen Solarpaneele (insbesondere Photovoltaikpaneele) schematisch dargestellt, wobei bei der auf der linken Seite der Figur 9 dargestellten Anordnung mehrere Solarpaneele vorgesehen sind, die von der Größe her an jeweils eine einzelne Versandeinheit angepasst sind. Bei der auf der rechten Seite der Figur 9 dargestellten Anordnung ist ein größeres Solarpaneel vorgesehen. Sämtliche im oberen Teil der Figur 9 dargestellten Solarpaneele sind mit einer Spirale dargestellt, um anzudeuten, dass im Sinne einer Energie¬übertragungs¬schnittstelle eine Spule zur Übertragung von elektrischer Energie in die jeweiligen Energiespeicher, insbesondere der zu den Solarpaneelen jeweilse benachbart angeordneten Versandeinheiten bzw. deren zugehörige Telekommunikations¬end¬geräte, vorhanden ist. Die weiterhin in der Figur 9 vorhandenen Pfeildarstellungen (jeweils auf der linken Seite beider Anordnungen) sollen andeuten, dass sich die Übertragung von elektrischer Energie zwischen den Versandeinheiten bzw. den Energiespeichern der zugeordneten Telekommunikationsendgeräte nach unten hin (bezüglich der räumlichen Anordnung von Versandeinheiten) fortsetzt.

In Figur 10 ist schematisch ein Ablaufdiagramm gemäß eines Ausführungsbeispiels des erfindungsgemäßen Verfahrens dargestellt. Das Verfahren beginnt bei einem initialen Prozessschritt 300 und verzweigt danach zu einem ersten Prozessschritt 301. Im ersten Prozessschritt 301 wird festgestellt, dass der (erste) Energiespeicher 215 des ersten Telekommunikations¬end¬geräts 21 (bzw. B5) einen gegenüber einem vorgegebenen Referenzladezustand (beispielsweise 5% der Gesamtladekapazität des (ersten) Energiespeichers 215, oder auch 10% oder 15% oder 20%) geringeren Ladezustand aufweist. Anschließend wird zu einem zweiten Prozessschritt 302 verzweigt. Im zweiten Prozessschritt 302 sendet das von einem niedrigen Ladezustand seines Energiespeichers betroffene Telekommunikationsendgerät (im betrachteten Fall das erste Telekommunikations¬end¬gerät 21 bzw. B5) eine Anfrage, insbesondere in Form einer Nachricht, an andere Telekommunikationsend¬geräte (B1 - B 4, B6 - B9). Die Anfrage bzw. die Nachricht umfasst eine Energieübertragungsinformation bzw. umfasst eine Indikation, eine Information hinsichtlich des Ladezustands der jeweiligen Energiespeicher (der typischerweise Mehrzahl von Telekommunikations¬end¬geräten B1 - B 4, B6 - B9, die die Nachricht empfangen) an das betroffene (d.h. vorliegend das erste) Telekommunikationsend¬gerät 21 (bzw. B5) zu übertragen. Anschließend wird zu einem dritten Prozessschritt 303 verzweigt. Im dritten Prozessschritt 303 übertragen die im zweiten Prozessschritt 302 angefragten Telekommunikations¬end¬geräte 22, 23 (bzw. B1 - B 4, B6 - B9) den aktuellen Ladezustand ihres Energiespeichers, d.h. beispielsweise, dass der Energiespeicher des zweiten Telekommunikations¬end¬geräts (bzw. B4) noch zu 80% geladen ist. Anschließend wird zu einem vierten Prozessschritt 304 verzweigt. Im vierten Prozessschritt 304 wird die abgeschätzte Energie berechnet, die von jedem der beteiligten bzw. angefragten Telekommunikations¬end¬geräte 22, 23 (bzw. B1 - B 4, B6 - B9) bzw. vom ersten Telekommunikations¬end¬gerät 21 (bzw. B5) bereitgestellt werden kann. Anschließend wird zu einem fünften Prozessschritt 305 verzweigt. Im fünften Prozessschritt 305 wird geprüft, ob zwei Telekommunikations¬end¬geräte (vorliegende das zweite Telekommunikations¬end¬gerät 22 und das erste Telekommunikations¬end¬gerät 21) ausreichend nahe beieinander positioniert sind, dass ein Ladevorgang mittels eines drahtlosen Ladeverfahrens durchgeführt werden kann. Falls diese Prüfung ein positives Ergebnis liefert, wird anschließend zu einem sechsten Prozessschritt 306 verzweigt. Falls diese Prüfung ein negatives Ergebnis liefert, wird anschließend zu einem neunten Prozessschritt 309 verzweigt. Im sechsten Prozessschritt 306 wird der Ladevorgang mittels drahtloser Übertragung von elektrischer Energie vom (beispielhaft) zweiten Telekommunikations¬end¬gerät 22 (bzw. B1 - B 4, B6 - B9) zum ersten Telekommunikations¬end¬gerät 21 durchgeführt. Anschließend wird zu einem siebten Prozessschritt 307 verzweigt. Im siebten Prozessschritt 307 wird der Ladevorgang bei Erreichen eines Abbruchkriteriums (beispielsweise, dass die zuvor vereinbarte Menge an elektrischer Energie zum ersten Telekommunikations¬end¬gerät 21 hin übertragen wurde) beendet. Anschließend wird zu einem achten Prozessschritt 308 verzweigt. Im achten Prozessschritt 308 wird das Verfahren beendet. Im neunten Prozessschritt 309 wird die Zieladresse des zweiten Telekommunikations¬end¬geräts 22 (bzw. B1 - B 4, B6 - B9) (durch das erste Telekommunikations¬end¬gerät 21) erfragt bzw. angefordert. Anschließend wird zu einem zehnten Prozessschritt 310 verzweigt. Im zehnten Prozessschritt 310 wird die Antwort des zweiten Telekommunikationsend¬geräts 22 bzw. werden die Antworten der Telekommunikations¬end¬geräte B1 - B 4, B6 - B9 zum ersten Telekommunikations¬end¬gerät 21 gesendet. Anschließend wird zu einem elften Prozessschritt 311 verzweigt. Im elften Prozessschritt 311 wird geprüft bzw. verglichen, ob ein Telekommunikations¬end¬gerät bzw. mehrere der Telekommunikations¬end¬geräte dasselbe Ziel bzw. dieselbe Zieladresse aufweist wie das erste Telekommunikations¬end¬gerät 21. Falls diese Prüfung ein positives Ergebnis liefert, wird anschließend zu einem zwölften Prozessschritt 312 verzweigt. Falls diese Prüfung ein negatives Ergebnis liefert, wird anschließend zum zweiten Prozessschritt 302 verzweigt. Im zwölften Prozessschritt 312 wird zumindest ein Teil der Kommunikationsfunktionalität des ersten Telekommunikations¬end¬geräts 21 durch das zweite Telekommunikations¬end¬gerät 22 (bzw. durch die Telekommunikationsendgeräte B1 - B 4, B6 - B9) abgewickelt, d.h. über die Weitverkehrskommunikationsschnittstelle 221 des zweiten Telekommunikations¬end¬geräts 22 wenigstens eine Nachricht - für das erste Telekommunikations¬end¬gerät 21 - zwischen dem Telekommunikationsnetz 100 und dem zweiten Telekommunikationsend¬gerät 22 übertragen. Anschließend wird zu einem dreizehnten Prozessschritt 313 verzweigt. Im dreizehnten Prozessschritt 313 wird durch das ersten Telekommunikations¬end¬gerät 21 und/oder durch das zweite Telekommunikations¬end¬gerät 22 (bzw. durch ein weiteres Telekommunikations¬end¬gerät) die Information über die gemeinsame Zieladresse an das Sendungsnachverfolgungssystem (Machine-to-Machine Server (M2M-Server) übertragen. Anschließend wird zum achten Prozessschritt 308 verzweigt.

## Patentansprüche

1. Verfahren zur Kommunikation zwischen wenigstens einem ersten Telekommunikationsendgerät (21) und einem zweiten Telekommunikationsendgerät (22), wobei das erste Telekommunikationsendgerät (21) und das zweite Telekommunikationsendgerät (22) jeweils eine Weitverkehrskommunikationsschnittstelle (211, 221) und eine Nahbereichskommunikationsschnittstelle (212, 222) aufweist, wobei die Weitverkehrskommunikationsschnittstellen (211, 221) des ersten und zweiten Telekommunikationsendgeräts (21, 22) für einen Datenaustausch mit einem Telekommunikationsnetz (100) konfiguriert sind, wobei die Nahbereichskommunikationsschnittstellen (212, 222) des ersten und zweiten Telekommunikationsendgeräts (21, 22) für einen Datenaustausch zwischen dem ersten und dem zweiten Telekommunikationsendgerät (21, 22) konfiguriert sind, wobei das erste Telekommunikationsendgerät (21) und das zweite Telekommunikationsendgerät (22) jeweils einen Energiespeicher (215, 225) zur Speicherung elektrischer Energie sowie jeweils eine Energieübertragungsschnittstelle (213, 223) aufweist, wobei die Energie¬übertragungs¬schnittstelle (213, 223) des ersten und zweiten Telekommunikationsendgeräts (21, 22) sowohl zur Übertragung elektrischer Energie zum Energiespeicher des ersten und/oder zweiten Telekommunikationsendgeräts (21, 22) hin als auch zur Übertragung elektrischer Energie vom Energiespeicher (215, 225) des ersten und/oder zweiten Telekommunikations¬end¬geräts (21, 22) weg konfiguriert sind, wobei das Verfahren für den Fall eines gegenüber einem vorgegebenen Referenzladezustand geringeren Ladezustands des Energiespeichers (215) des ersten Telekommunikations¬end¬geräts (21) die folgenden Schritte aufweist:
-- in einem ersten Verfahrensschritt wird über die Nahbereichskommunikationsschnittstelle (212) des ersten Telekommunikationsend¬geräts (21) und über die Nahbereichskommunikationsschnittstelle (222) des zweiten Telekommunikationsend¬geräts (22) eine eine Energieübertragungsinformation umfassende Nachricht zum zweiten Telekommunikations¬end¬gerät (22) übertragen, wobei die Energieübertragungsinformation eine Anfrage zur Übertragung zusätzlicher Energie in den Energiespeicher (215) des ersten Telekommunikationsend¬geräts (21) umfasst,
-- es wird ein dem ersten Verfahrensschritt nachfolgender zweiter Verfahrensschritt oder ein dem ersten Verfahrensschritt nachfolgender dritter Verfahrensschritt durchgeführt, wobei im zweiten Verfahrensschritt über die Energie¬übertragungs¬schnittstelle (213) des ersten Telekommunikationsendgeräts (21) und über die Energie¬übertragungsschnittstelle (223) des zweiten Telekommunikations¬end¬geräts (22) der Ladezustand des Energiespeichers (215) des ersten Telekommunikations¬end¬geräts (21) erhöht wird, wobei im dritten Verfahrensschritt über die Weitverkehrskommunikationsschnittstelle (221) des zweiten Telekommunikations¬end¬geräts (22) wenigstens eine Nachricht - für das erste Telekommunikations¬end¬gerät (21) - zwischen dem Telekommunikationsnetz (100) und dem zweiten Telekommunikationsend¬gerät (22) übertragen wird, wobei die Telekommunikationsendgeräte (21, 22) als Teil von logistischen Versandeinheiten in einer vorgegebenen räumlichen Anordnung übereinander und/oder nebeneinander positioniert sind.

2. Verfahren nach Anspruch 1, **dadurch gekennzeichnet, dass** ein drittes Telekommunikations¬end¬gerät (23) eine Weitverkehrskommunikationsschnittstelle (231), eine Nahbereichskommunikationsschnittstelle (232) und einen Energiespeicher (235) zur Speicherung elektrischer Energie aufweist, wobei das Verfahren in einem auf den ersten Verfahrensschritt nachfolgenden vierten Verfahrensschritt vorsieht, dass, insbesondere für den Fall, dass weder der zweite noch der dritte Verfahrensschritt durchgeführt wird, über die Weitverkehrskommunikationsschnittstelle (231) des dritten Telekommunikations¬end¬geräts (23) wenigstens eine Nachricht - für das erste Telekommunikations¬end¬gerät (21) - zwischen dem Telekommunikationsnetz (100) und dem dritten Telekommunikationsend¬gerät (23) übertragen wird.

3. Verfahren nach einem der vorhergehenden Ansprüche, **dadurch gekennzeichnet, dass** zeitlich vor dem dritten Verfahrensschritt ein Informationsaustausch zwischen dem ersten und zweiten Telekommunikations¬end¬gerät (21, 22) und/oder zeitlich vor dem vierten Verfahrensschritt ein Informationsaustausch zwischen dem ersten und dritten Telekommunikations¬end¬gerät (21, 23) erfolgt, wobei sowohl der Informationsaustausch zwischen dem ersten und zweiten Telekommunikations¬end¬gerät (21, 22) als auch der Informationsaustausch zwischen dem ersten und dritten Telekommunikations¬end¬gerät (21, 23) mittels der jeweiligen Nahbereichs¬kommunikations¬schnittstellen (212, 222, 232) der Telekommunikations¬end¬geräte (21, 22, 23) erfolgt.

4. Verfahren nach einem der vorhergehenden Ansprüche, **dadurch gekennzeichnet, dass** in einem zeitlich vor oder während des zweiten Verfahrensschritts durchgeführten fünften Verfahrensschritts, über die Energieübertragungsschnittstelle (223) des zweiten Telekommunikationsendgeräts (22) einerseits und über eine Energiequelle oder eine Energie-übertragungsschnittstelle eines weiteren Telekommunikations¬end¬geräts andererseits der Ladezustand des Energiespeichers (225) des zweiten Telekommunikations¬end¬geräts (21) erhöht wird.

5. Verfahren nach einem der vorhergehenden Ansprüche, **dadurch gekennzeichnet, dass** eine Übertragung von Energie zur Erhöhung des Ladezustands des Energiespeichers (215, 225, 235) eines der Telekommunikations¬end¬geräte (21, 22, 23) zwischen zwei direkt benachbart zueinander angeordneten Telekommunikationsendgeräten (215, 225, 235) erfolgt.

6. Verfahren nach einem der vorhergehenden Ansprüche, **dadurch gekennzeichnet, dass** in oder an einem Außenbereich der räumlichen Anordnung der Versandeinheiten eine Energiequelle oder eine Energieübertragungs¬schnittstelle angeordnet ist, wobei in einem ersten Energieladeschritt der Energiespeicher des direkt benachbart zu der Energiequelle oder Energie¬übertragungs¬schnittstelle angeordneten Telekommunikations¬end¬geräts oder die Energiespeicher der direkt benachbart zu der Energiequelle oder Energie¬übertragungs¬schnittstelle angeordneten Telekommunikations¬end¬geräte geladen werden und wobei in einem zweiten Energieladeschritt der Energiespeicher des nächsten, weiter von der Energiequelle oder Energie¬übertragungs¬schnittstelle entfernt angeordneten Telekommunikations¬end¬geräts oder die Energiespeicher der nächsten, weiter von der Energiequelle oder Energie¬übertragungs¬schnittstelle entfernt angeordneten Telekommunikations¬end¬geräte geladen werden.

7. Verfahren nach einem der vorhergehenden Ansprüche, **dadurch gekennzeichnet, dass** die Telekommunikations¬end¬geräte (21, 22, 23) als Teil von logistischen Versandeinheiten in einer vorgegebenen räumlichen Anordnung relativ zueinander positioniert sind, insbesondere übereinander und/oder nebeneinander, wobei der Informationsaustausch zwischen dem ersten und zweiten Telekommunikations¬end¬gerät (21, 22) zeitlich vor dem dritten Verfahrensschritt und/oder der Informationsaustausch zwischen dem ersten und dritten Telekommunikations¬end¬gerät (21, 23) zeitlich vor dem vierten Verfahrensschritt insbesondere zwischen zwei Telekommunikationsendgeräten (215, 225, 235) erfolgt, die in räumlicher Nähe zueinander positioniert sind, insbesondere
-- direkt benachbart zueinander angeordnet sind oder
-- in diagonaler Richtung bezüglich der räumlichen Anordnung der Versandeinheiten direkt benachbart zueinander angeordnet sind oder
-- mit höchstens einer Zwischenlage von Versandeinheiten angeordnet sind oder
-- mit höchstens zwei Zwischenlagen von Versandeinheiten angeordnet sind oder
-- mit höchstens drei Zwischenlagen von Versandeinheiten angeordnet sind oder
-- mit höchstens vier Zwischenlagen von Versandeinheiten angeordnet sind oder
-- mit höchstens fünf Zwischenlagen von Versandeinheiten angeordnet sind.

8. Verfahren nach einem der vorhergehenden Ansprüche, **dadurch gekennzeichnet, dass** die Erhöhung des Ladezustands des Energiespeichers (215) des ersten Telekommunikations¬end¬geräts (21) mittels der jeweiligen Energieübertragungsschnittstellen (213, 223) des ersten und zweiten Telekommunikationsendgeräts (21, 22) mittels induktiver Energieübertragung und/oder mittels resonanter Energieübertragung erfolgt.

9. System zur Kommunikation zwischen wenigstens einem ersten Telekommunikationsendgerät (21) und einem zweiten Telekommunikationsendgerät (22), wobei das System das erste Telekommunikations¬end¬gerät (21), das zweite Telekommunikations¬end¬gerät (22) und das Telekommunikationsnetz (100) umfasst, wobei das erste Telekommunikationsendgerät (21) und das zweite Telekommunikationsendgerät (22) jeweils eine Weitverkehrskommunikationsschnittstelle (211, 221) und eine Nahbereichskommunikationsschnittstelle (212, 222) aufweist, wobei die Weitverkehrskommunikationsschnittstellen (211, 221) des ersten und zweiten Telekommunikationsendgeräts (21, 22) für einen Datenaustausch mit einem Telekommunikationsnetz (100) konfiguriert sind, wobei die Nahbereichskommunikationsschnittstellen (212, 222) des ersten und zweiten Telekommunikationsendgeräts (21, 22) für einen Datenaustausch zwischen dem ersten und dem zweiten Telekommunikationsendgerät (21, 22) konfiguriert sind, wobei das erste Telekommunikationsendgerät (21) und das zweite Telekommunikationsendgerät (22) jeweils einen Energiespeicher (215, 225) zur Speicherung elektrischer Energie sowie jeweils eine Energieübertragungsschnittstelle (213, 223) aufweist, wobei die Energie¬übertragungs¬schnittstelle (213, 223) des ersten und zweiten Telekommunikationsendgeräts (21, 22) sowohl zur Übertragung elektrischer Energie zum Energiespeicher des ersten und/oder zweiten Telekommunikationsendgeräts (21, 22) hin als auch zur Übertragung elektrischer Energie vom Energiespeicher (215) des ersten und/oder zweiten Telekommunikations¬end¬geräts (21, 22) weg konfiguriert sind, wobei das System für den Fall eines gegenüber einem vorgegebenen Referenzladezustand geringeren Ladezustands des Energiespeichers (215) des ersten Telekommunikations¬end¬geräts (21) derart konfiguriert ist, dass:
-- über die Nahbereichskommunikationsschnittstelle (212) des ersten Telekommunikationsend¬geräts (21) und über die Nahbereichskommunikationsschnittstelle (222) des zweiten Telekommunikationsend¬geräts (22) eine eine Energieübertragungsinformation umfassende Nachricht zum zweiten Telekommunikations¬end¬gerät (22) übertragen wird, wobei die Energieübertragungsinformation eine Anfrage zur Übertragung zusätzlicher Energie in den Energiespeicher (215) des ersten Telekommunikationsend¬geräts (21) umfasst, und
-- entweder über die Energie¬übertragungs¬schnittstelle (213) des ersten Telekommunikationsendgeräts (21) und über die Energie¬übertragungsschnittstelle (223) des zweiten Telekommunikations¬end¬geräts (22) der Ladezustand des Energiespeichers (215) des ersten Telekommunikations¬end¬geräts (21) erhöht wird,
-- oder über die Weitverkehrskommunikationsschnittstelle (221) des zweiten Telekommunikations¬end¬geräts (22) wenigstens eine Nachricht - für das erste Telekommunikations¬end¬gerät (21) - zwischen dem Telekommunikationsnetz (100) und dem zweiten Telekommunikationsend¬gerät (22) übertragen wird, wobei die Telekommunikationsendgeräte (21, 22) als Teil von logistischen Versandeinheiten in einer vorgegebenen räumlichen Anordnung übereinander und/oder nebeneinander positioniert sind.

10. Computerprogramm mit Programmcodemitteln, mit deren Hilfe die Schritte eines Verfahrens nach einem der Ansprüche 1 bis 8 durchführbar sind, wenn das Computerprogramm auf einer programmierbaren Einrichtung, insbesondere als Teil des Systems, oder auf dem ersten oder zweiten Telekommunikationsendgerät (21, 22) ausgeführt wird.

11. Computerlesbares Medium mit einem auf dem computerlesbaren Medium gespeicherten Computerprogramm mit Programmcodemitteln, die dazu geeignet sind, dass die Schritte eines Verfahrens nach einem der Ansprüche 1 bis 8 durchführbar sind, wenn das Computerprogramm auf einer programmierbaren Einrichtung, insbesondere als Teil des Systems, oder auf dem ersten oder zweiten Telekommunikationsendgerät (21, 22) ausgeführt wird.

## Claims

1. Method for communication between at least a first telecommunication terminal (21) and a second telecommunication terminal (22), the first telecommunication terminal (21) and the second telecommunication terminal (22) each having a wide-area communication interface (211, 221) and a close-range communication interface (212, 222), the wide-area communication interfaces (211, 221) of the first and second telecommunication terminal (21, 22) being configured for data exchange with a telecommunication network (100), the close-range communication interfaces (212, 222) of the first and second telecommunication terminal (21, 22) being configured for data exchange between the first and the second telecommunication terminal (21, 22), the first telecommunication terminal (21) and the second telecommunication terminal (22) each having an energy store (215, 225) for storing electrical energy and each having an energy transmission interface (213, 223), the energy transmission interface (213, 223) of the first and second telecommunication terminal (21, 22) being configured both for transmitting electrical energy to the energy store of the first and/or second telecommunication terminal (21, 22) and for transmitting electrical energy from the energy store (215, 225) of the first and/or second telecommunication terminal (21, 22), the method having the following steps in the event of a charge state of the energy store (215) of the first telecommunication terminal (21) which is less than a predetermined reference charge state:
- in a first method step, a message comprising a piece of energy transmission information is transmitted to the second telecommunication terminal (22) via the close-range communication interface (212) of the first telecommunication terminal (21) and via the close-range communication interface (222) of the second telecommunication terminal (22), the piece of energy transmission information comprising a request for transmission of additional energy into the energy store (215) of the first telecommunication terminal (21),
- a second method step following the first method step or a third method step following the first method step is carried out, the charge state of the energy store (215) of the first telecommunication terminal (21) being increased in the second method step via the energy transmission interface (213) of the first telecommunication terminal (21) and via the energy transmission interface (223) of the second telecommunication terminal (22), at least one message being transmitted, for the first telecommunication terminal (21), between the telecommunication network (100) and the second telecommunication terminal (22) in the third method step via the wide-area communication interface (221) of the second telecommunication terminal (22), the telecommunication terminals (21, 22) being positioned above and/or alongside one another in a predetermined spatial arrangement as part of logistical dispatch units.

2. Method according to claim 1, **characterised in that** a third telecommunication terminal (23) has a wide-area communication interface (231), a close-range communication interface (232) and an energy store (235) for storing electrical energy, the method providing, in a fourth method step following the first method step, in particular in the event that neither the second nor the third method step is carried out, that at least one message is transmitted, for the first telecommunication terminal (21), between the telecommunication network (100) and the third telecommunication terminal (23) via the wide-area communication interface (231) of the third telecommunication terminal (23).

3. Method according to either of the preceding claims, **characterised in that** temporally before the third method step there is an information exchange between the first and second telecommunication terminal (21, 22) and/or temporally before the fourth method step there is an information exchange between the first and third telecommunication terminal (21, 23), both the information exchange between the first and second telecommunication terminal (21, 22) and the information exchange between the first and third telecommunication terminal (21, 23) taking place by means of the respective short-range communication interfaces (212, 222, 232) of the telecommunication terminals (21, 22, 23).

4. Method according to any of the preceding claims, **characterised in that**, in a fifth method step carried out temporally before or during the second method step, the charge state of the energy store (225) of the second telecommunication terminal (21) is increased via the energy transmission interface (223) of the second telecommunication terminal (22) on the one hand and via an energy source or energy transmission interface of a further telecommunication terminal on the other hand.

5. Method according to any of the preceding claims, **characterised in that** a transmission of energy to increase the charge state of the energy store (215, 225, 235) of one of the telecommunication terminals (21, 22, 23) takes place between two telecommunication terminals (215, 225, 235) which are arranged directly mutually adjacent.

6. Method according to any of the preceding claims, **characterised in that** an energy source or energy transmission interface is arranged in or on an external region of the spatial arrangement of the dispatch units, the energy store of the telecommunication terminal arranged directly adjacent to the energy source or energy transmission interface, or the energy store of the telecommunication terminals arranged directly adjacent to the energy source or energy transmission interval, being charged in a first energy charging step, and the energy store of the next telecommunication terminal arranged further away from the energy source or energy transmission interface, or the energy store of the next telecommunication terminals arranged further away from the energy source or energy transmission interface, being charged in a second energy charging step.

7. Method according to any of the preceding claims, **characterised in that** the telecommunication terminals (21, 22, 23) are positioned in a predetermined spatial arrangement relative to one another as part of logistical dispatch units, in particular above and/or alongside one another, the information exchange between the first and second telecommunication terminal (21, 22) taking place temporally before the third method step and/or the information exchange between the first and third telecommunication terminal (21, 23) taking place temporally before the fourth method step, in particular between two telecommunication terminals (215, 225, 235) which are positioned in the spatial vicinity of one another, in particular
- arranged directly mutually adjacent or
- arranged directly mutually adjacent in a diagonal direction with respect to the spatial arrangement of the dispatch units or
- arranged with at most one intermediate layer of dispatch units or
- arranged with at most two intermediate layers of dispatch units or
- arranged with at most three intermediate layers of dispatch units or
- arranged with at most four intermediate layers of dispatch units or
- arranged with at most five intermediate layers of dispatch units.

8. Method according to any of the preceding claims, **characterised in that** the increase in the charge state of the energy store (215) of the telecommunication terminal (21) takes place by means of the associated energy transmission interfaces (213, 223) of the first and second telecommunication terminal (21, 22) by means of inductive energy transmission and/or by means of resonant energy transmission.

9. System for communication between at least a first telecommunication terminal (21) and a second telecommunication terminal (22), the system comprising the first telecommunication terminal (21), the second telecommunication terminal (22) and the telecommunication network (100), the first telecommunication terminal (21) and the second telecommunication terminal (22) each having a wide-area communication interface (211, 221) and a close-range communication interface (212, 222), the wide-area communication interfaces (211, 221) of the first and second telecommunication terminal (21, 22) being configured for a data exchange with a telecommunication network (100), the close-range communication interfaces (212, 222) of the first and second telecommunication terminal (21, 22) being configured for a data exchange between the first and the second telecommunication terminal (21, 22), the first telecommunication terminal (21) and the second telecommunication terminal (22) each having an energy store (215, 225) for storing electrical energy and each having an energy transmission interface (213, 223), the energy transmission interface (213, 223) of the first and second telecommunication terminal (21, 22) being configured both for transmitting electrical energy to the energy store of the first and/or second telecommunication terminal (21, 22) and for transmitting electrical energy from the energy store (215) of the first and/or second telecommunication terminal (21, 22), the system being configured, in the event of a charge state of the energy store (215) of the first telecommunication terminal (21) which is less than a predetermined reference charge state, in such a way that:
- a message comprising a piece of energy transmission information is transmitted to the second telecommunication terminal (22) via the close-range communication interface (212) of the first telecommunication terminal (21) and via the close-range communication interface (222) of the second telecommunication terminal (22), the piece of energy transmission information comprising a request for transmission of additional energy into the energy store (215) of the first telecommunication terminal (21),
- either the charge state of the energy store (215) of the first telecommunication terminal (21) is increased via the energy transmission interface (213) of the first telecommunication terminal (21) and via the energy transmission interface (223) of the second telecommunication terminal (22),
- or at least one message is transmitted, for the first telecommunication terminal (21), between the telecommunication network (100) and the second telecommunication terminal (22) via the wide-area communication interface (221) of the second telecommunication terminal (22), the telecommunication terminals (21, 22) being positioned above and/or alongside one another in a predetermined spatial arrangement as part of logistical dispatch units.

10. Computer program comprising program coding means, by way of which the steps of a method according to any of claims 1 to 8 can be carried out when the computer program is executed on a programmable device, in particular as part of the system, or on the first or second telecommunication terminal (21, 22).

11. Computer-readable medium comprising a computer program, stored on the computer-readable medium and comprising program coding means which are suitable for the steps of a method according to any of claims 1 to 8 to be able to be carried out when the computer program is executed on a programmable device, in particular as part of the system, or on the first or second telecommunication terminal (21, 22).

## Revendications

1. Procédé de communication entre au moins un premier terminal de télécommunication (21) et un deuxième terminal de télécommunication (22), dans lequel le premier terminal de télécommunication (21) et le deuxième terminal de télécommunication (22) présentent chacun une interface de communication à grande distance (211, 221) et une interface de communication à courte portée (212, 222), dans lequel les interfaces de communication à grande distance (211, 221) du premier et du deuxième terminal de télécommunication (21, 22) sont configurées pour un échange de données avec un réseau de télécommunication (100), dans lequel les interfaces de communication à courte portée (212, 222) du premier et du deuxième terminal de télécommunication (21, 22) sont configurées pour un échange de données entre le premier et le deuxième terminal de télécommunication (21, 22), dans lequel le premier terminal de télécommunication (21) et le deuxième terminal de télécommunication (22) présentent chacun un dispositif de stockage d'énergie (215, 225) pour stocker de l'énergie électrique ainsi que chacun une interface de transfert d'énergie (213, 223), dans lequel l'interface de transfert d'énergie (213, 223) du premier et du deuxième terminal de télécommunication (21, 22) est configurée à la fois pour transférer de l'énergie électrique vers le dispositif de stockage d'énergie du premier et/ou deuxième terminal de télécommunication (21, 22) et pour transférer de l'énergie électrique à partir du dispositif de stockage d'énergie (215, 225) du premier et/ou deuxième terminal de télécommunication (21, 22), lequel procédé présente les étapes suivantes dans le cas d'un état de charge du dispositif de stockage d'énergie (215) du premier terminal de télécommunication (21) inférieur à un état de charge de référence prédéfini :
- dans une première étape de procédé, un message comprenant une information de transfert d'énergie est transmis au deuxième terminal de télécommunication (22) via l'interface de communication à courte portée (212) du premier terminal de télécommunication (21) et via l'interface de communication à courte portée (222) du deuxième terminal de télécommunication (22), l'information de transfert d'énergie comprenant une demande de transfert d'énergie supplémentaire dans le dispositif de stockage d'énergie (215) du premier terminal de télécommunication (21),
- une deuxième étape de procédé suivant la première étape de procédé ou une troisième étape de procédé suivant la première étape de procédé est exécutée, dans laquelle deuxième étape de procédé, l'état de charge du dispositif de stockage d'énergie (215) du premier terminal de télécommunication (21) est augmenté via l'interface de transfert d'énergie (213) du premier terminal de télécommunication (21) et via l'interface de transfert d'énergie (223) du deuxième terminal de télécommunication (22), et dans laquelle troisième étape de procédé, au moins un message - pour le premier terminal de télécommunication (21) - est transmis entre le réseau de télécommunication (100) et le deuxième terminal de télécommunication (22) via l'interface de communication à grande distance (221) du deuxième terminal de télécommunication (22), les terminaux de télécommunication (21, 22) étant positionnés l'un au-dessus de l'autre et/ou à côté l'un de l'autre dans une disposition spatiale prédéfinie en tant que partie d'unités d'expédition logistiques.

2. Procédé selon la revendication 1, **caractérisé en ce qu'**un troisième terminal de télécommunication (23) présente une interface de communication à grande distance (231), une interface de communication à courte portée (232) et un dispositif de stockage d'énergie (235) pour stocker de l'énergie électrique, dans lequel procédé il est prévu que, dans une quatrième étape de procédé suivant la première étape de procédé, en particulier dans le cas où ni la deuxième ni la troisième étape de procédé ne sont exécutées, au moins un message - pour le premier terminal de télécommunication (21) - est transmis entre le réseau de télécommunication (100) et le troisième terminal de télécommunication (23) via l'interface de communication à grande distance (231) du troisième terminal de télécommunication (23).

3. Procédé selon l'une des revendications précédentes, **caractérisé en ce qu'**un échange d'informations entre le premier et le deuxième terminal de télécommunication (21, 22) a lieu chronologiquement avant la troisième étape de procédé et/ou un échange d'informations entre le premier et le troisième terminal de télécommunication (21, 23) a lieu chronologiquement avant la quatrième étape de procédé, l'échange d'informations entre le premier et le deuxième terminal de télécommunication (21, 22) ainsi que l'échange d'informations entre le premier et le troisième terminal de télécommunication (21, 23) ayant lieu au moyen des interfaces de communication à courte portée respectives (212, 222, 232) des terminaux de télécommunication (21, 22, 23).

4. Procédé selon l'une des revendications précédentes, **caractérisé en ce que**, dans une cinquième étape de procédé, exécutée chronologiquement avant ou pendant la deuxième étape de procédé, l'état de charge du dispositif de stockage d'énergie (225) du deuxième terminal de télécommunication (21) est augmenté via l'interface de transfert d'énergie (223) du deuxième terminal de télécommunication (22) d'une part et via une source d'énergie ou une interface de transfert d'énergie d'un autre terminal de télécommunication d'autre part.

5. Procédé selon l'une des revendications précédentes, **caractérisé en ce qu'**un transfert d'énergie pour augmenter l'état de charge du dispositif de stockage d'énergie (215, 225, 235) de l'un des terminaux de télécommunication (21, 22, 23) a lieu entre deux terminaux de télécommunication (215, 225, 235) disposés directement au voisinage l'un de l'autre.

6. Procédé selon l'une des revendications précédentes, **caractérisé en ce qu'**une source d'énergie ou une interface de transfert d'énergie est disposée dans ou sur une zone extérieure de la disposition spatiale des unités d'expédition, dans lequel, dans une première étape de charge d'énergie, le dispositif de stockage d'énergie du terminal de télécommunication disposé directement au voisinage de la source d'énergie ou de l'interface de transfert d'énergie ou les dispositifs de stockage d'énergie des terminaux de télécommunication disposés directement au voisinage de la source d'énergie ou de l'interface de transfert d'énergie sont chargés et dans lequel, dans une deuxième étape de charge d'énergie, le dispositif de stockage d'énergie du terminal de télécommunication suivant, plus éloigné de la source d'énergie ou de l'interface de transfert d'énergie, est chargé, ou les dispositifs de stockage d'énergie des terminaux de télécommunication suivants, plus éloignés de la source d'énergie ou de l'interface de transfert d'énergie, sont chargés.

7. Procédé selon l'une des revendications précédentes, **caractérisé en ce que** les terminaux de télécommunication (21, 22, 23) sont positionnés dans une disposition spatiale prédéfinie les uns par rapport aux autres, en particulier les uns au-dessus des autres et/ou les uns à côté des autres en tant que partie d'unités d'expédition logistiques, dans lequel l'échange d'informations entre le premier et le deuxième terminal de télécommunication (21, 22) a lieu chronologiquement avant la troisième étape de procédé et/ou l'échange d'informations entre le premier et le troisième terminal de télécommunication (21, 23) a lieu chronologiquement avant la quatrième étape de procédé, en particulier entre deux terminaux de télécommunication (215, 225, 235) qui sont positionnés à proximité spatiale l'un de l'autre, en particulier
- sont disposés directement au voisinage l'un de l'autre ou
- sont disposés directement au voisinage l'un de l'autre dans une direction diagonale par rapport à la disposition spatiale des unités d'expédition ou
- sont disposés avec au maximum une intercalation d'unités d'expédition ou
- sont disposés avec au maximum deux intercalations d'unités d'expédition ou
- sont disposés avec au maximum trois intercalations d'unités d'expédition ou
- sont disposés avec au maximum quatre intercalations d'unités d'expédition ou
- sont disposés avec au maximum cinq intercalations d'unités d'expédition.

8. Procédé selon l'une des revendications précédentes, **caractérisé en ce que** l'augmentation de l'état de charge du dispositif de stockage d'énergie (215) du premier terminal de télécommunication (21) via les interfaces de transfert d'énergie respectives (213, 223) du premier et du deuxième terminal de télécommunication (21, 22) a lieu au moyen d'un transfert d'énergie par induction et/ou au moyen d'un transfert d'énergie par résonance.

9. Système de communication entre au moins un premier terminal de télécommunication (21) et un deuxième terminal de télécommunication (22), lequel système comprend le premier terminal de télécommunication (21), le deuxième terminal de télécommunication (22) et le réseau de télécommunication (100), dans lequel le premier terminal de télécommunication (21) et le deuxième terminal de télécommunication (22) présentent chacun une interface de communication à grande distance (211, 221) et une interface de communication à courte portée (212, 222), dans lequel les interfaces de communication à grande distance (211, 221) du premier et du deuxième terminal de télécommunication (21, 22) sont configurées pour un échange de données avec un réseau de télécommunication (100), dans lequel les interfaces de communication à courte portée (212, 222) du premier et du deuxième terminal de télécommunication (21, 22) sont configurées pour un échange de données entre les premier et deuxième terminaux de télécommunication (21, 22), dans lequel le premier terminal de télécommunication (21) et le deuxième terminal de télécommunication (22) présentent chacun un dispositif de stockage d'énergie (215, 225) pour stocker de l'énergie électrique ainsi que chacun une interface de transfert d'énergie (213, 223), dans lequel l'interface de transfert d'énergie (213, 223) du premier et du deuxième terminal de télécommunication (21, 22) est configurée à la fois pour transférer de l'énergie électrique vers le dispositif de stockage d'énergie du premier et/ou deuxième terminal de télécommunication (21, 22) et pour transférer de l'énergie électrique à partir du dispositif de stockage d'énergie (215) du premier et/ou deuxième terminal de télécommunication (21, 22), lequel système est configuré de telle sorte que, dans le cas d'un état de charge du dispositif de stockage d'énergie (215) du premier terminal de télécommunication (21) inférieur à un état de charge de référence prédéfini :
- un message comprenant une information de transfert d'énergie est transmis au deuxième terminal de télécommunication (22) via l'interface de communication à courte portée (212) du premier terminal de télécommunication (21) et via l'interface de communication à courte portée (222) du deuxième terminal de télécommunication (22), l'information de transfert d'énergie comprenant une demande de transfert d'énergie supplémentaire dans le dispositif de stockage d'énergie (215) du premier terminal de télécommunication (21),
- soit l'état de charge du dispositif de stockage d'énergie (215) du premier terminal de télécommunication (21) est augmenté via l'interface de transfert d'énergie (213) du premier terminal de télécommunication (21) et via l'interface de transfert d'énergie (223) du deuxième terminal de télécommunication (22),
- soit au moins un message - pour le premier terminal de télécommunication (21) - est transmis entre le réseau de télécommunication (100) et le deuxième terminal de télécommunication (22) via l'interface de communication à grande distance (221) du deuxième terminal de télécommunication (22), les terminaux de télécommunication (21, 22) étant positionnés l'un au-dessus de l'autre et/ou à côté l'un de l'autre dans une disposition spatiale prédéfinie en tant que partie d'unités d'expédition logistiques.

10. Programme d'ordinateur comprenant des moyens de code de programme à l'aide desquels les étapes d'un procédé selon l'une des revendications 1 à 8 peuvent être mises en œuvre lorsque le programme d'ordinateur est exécuté sur un dispositif programmable, en particulier faisant partie du système, ou sur le premier ou le deuxième terminal de télécommunication (21, 22).

11. Support lisible par ordinateur avec un programme d'ordinateur stocké sur le support lisible par ordinateur, comprenant des moyens de code de programme qui sont conçus pour en œuvre les étapes d'un procédé selon l'une des revendications 1 à 8 lorsque le programme d'ordinateur est exécuté sur un dispositif programmable, en particulier faisant partie du système, ou sur le premier ou le deuxième terminal de télécommunication (21, 22).
